(19) Europäisches Patentamt
European Patent Office
Office européen des brevets

(11) **EP 3 550 921 B1**

(12) **EUROPEAN PATENT SPECIFICATION**

(45) Date of publication and mention
of the grant of the patent:
**09.09.2020 Bulletin 2020/37**

(51) Int Cl.:
***H04W 72/12*** *(2009.01)*    ***H04W 74/08*** *(2009.01)*

(21) Application number: **19176963.7**

(22) Date of filing: **02.11.2015**

(54) **ADVANCED LAA SCHEDULING FOR MULTI-POINT SUBSET TRANSMISSION IN SHARED CELLS**

ERWEITERTE LAA-PLANUNG FÜR MEHRPUNKT-SUBSET-ÜBERTRAGUNG IN GETEILTEN ZELLEN

PLANIFICATION D'ACCÈS ASSISTÉ PAR LICENCE (LAA) AVANCÉE POUR TRANSMISSION DE SOUS-ENSEMBLE MULTIPOINT DANS DES CELLULES PARTAGÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.10.2019 Bulletin 2019/41**

(62) Document number(s) of the earlier application(s) in accordance with Art. 76 EPC:
**15798222.4 / 3 372 035**

(73) Proprietor: **Telefonaktiebolaget LM Ericsson (publ)**
**164 83 Stockholm (SE)**

(72) Inventors:
• **CIMPU, Virgil**
**Ottawa, Ontario K2G 6V2 (CA)**
• **PARSONS, Eric W.**
**Stittsville, Ontario K2S 1E2 (CA)**
• **RICHARDS, Christopher**
**Ottawa, Ontario K1S 1L5 (CA)**

(74) Representative: **Röthinger, Rainer**
**Wuesthoff & Wuesthoff**
**Patentanwälte PartG mbB**
**Schweigerstrasse 2**
**81541 München (DE)**

(56) References cited:
**US-A1- 2013 322 279    US-A1- 2015 173 056**
**US-A1- 2015 312 840**

• **ERICSSON: "On Support of Multiple DL Data Transmission Starting Points", 3GPP DRAFT; R1-156047, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051039810, Retrieved from the Internet: URL:http://www.3gpp.org/ftp/Meetings_3GPP_SYNC/RAN1/Docs/ [retrieved on 2015-10-04]**

**Description**

Technical Field

The present disclosure relates to Clear Channel Assessment (CCA) in a shared cell deployment of a heterogeneous cellular communications network.

Background

*License Assisted Access (LAA)*

The fast uptake of Third Generation Partnership Project (3GPP) Long Term Evolution (LTE) in different regions of the world shows both that demand for wireless broadband data is increasing and that LTE is an extremely successful platform to meet that demand. Existing and new spectrum licensed for exclusive use by International Mobile Telecommunication (IMT) technologies will remain fundamental for providing seamless coverage, achieving the highest spectral efficiency, and ensuring the highest reliability of cellular networks through careful planning and deployment of high-quality network equipment and devices.

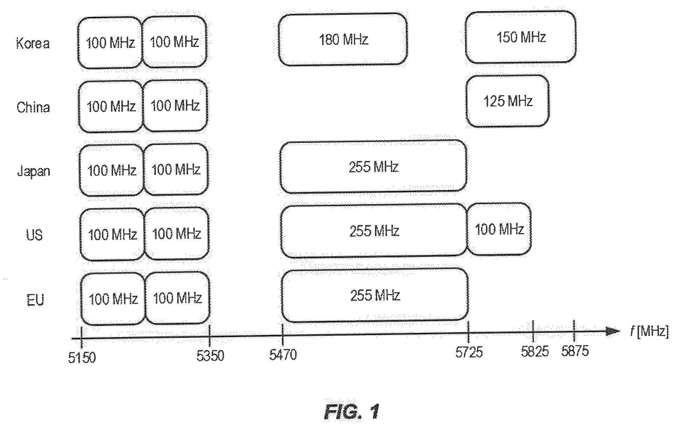

To meet ever increasing data traffic demand from users and, in particular, in concentrated high traffic buildings or hot spots, more mobile broadband bandwidth will be needed. Given the large amount of spectrum available in the unlicensed bands around the world as shown in Figure 1, unlicensed spectrum is more and more considered by cellular operators as a complementary tool to augment their service offerings. While unlicensed spectrum can never match the qualities of the licensed regime, solutions that allow an efficient use of unlicensed spectrum as a complement to licensed deployments have the potential to bring great value to the 3GPP operators and, ultimately, to the 3GPP industry as a whole. This type of solution would enable operators and vendors to leverage the existing or planned investments in LTE/ Evolved Packet Core (EPC) hardware in the radio and core network.

Regulatory information for operating in the unlicensed bands around the world (covering Europe, the United States (US), Canada, Mexico, Israel, Russia, South Africa, Turkey, China, Japan, Korea, India, Taiwan, Singapore, and Australia) was collected by 3GPP companies during 2014 and is now incorporated in 3GPP technical report for LAA Technical Report (TR) 36.889 V13.0.0 (2015-06). Most regulations put limits on transmission powers in the unlicensed bands. For instance, for the lower 5 Gigahertz (GHz) band, the maximum transmission power in Europe is 23 decibel-milliwatts (dBm) Equivalent Isotropically Radiated Power (EIRP). As a result of the transmission power limits, LAA Secondary Cells (SCells) will generally be more suited for small cell deployments. In the mid 5 GHz band, most countries require the equipment to detect whether radar systems are operating on the same channels in the region. This type of Dynamic Frequency Selection (DFS) rule requires the master equipment (a LAA enhanced or evolved Node B (eNB) or Wi-Fi™ Access Point (AP)) to detect the presence of certain radar signatures. If such a signature is detected, the equipment is required to cease operation in and vacate from the channel within seconds.

The unlicensed spectrum in general allows nonexclusive use. Given the widespread deployment and usage of other technologies in unlicensed spectrum for wireless communications in our society, it is envisioned that LTE would have to coexist with existing and future uses of unlicensed spectrum. Some regulatory regimes adopt a technology-neutral coexistence policy. For instance, the US Federal Communications Commission (FCC) Part 15.407 rule states "should harmful interference to licensed services in this band occur, they will be required to take corrective action." On the other hand, Japanese regulation explicitly requires Clear Channel Assessment (CCA) and a maximum channel occupancy time of 4 milliseconds (ms). In Europe, the European directive for Radio and Telecommunications Terminal Equipment (R&TTE directive) ERC/REC 70-03, dated August 22, 2011, requires "WAS/RLANs operating in the bands 5 250-5 350 MHz and 5 470-5 725 MHz shall use mitigation techniques that give at least the same protection as the detection, operational and response requirements described in EN 301 893 to ensure compatible operation with radio determination systems." The cited EN 301 893 defines conformance via three possible solutions: (1) IEEE 802.11 protocol, (2) generic load-based CCA protocol, or (3) frame-based CCA protocol.

3GPP is developing a single global set of standards for LAA with functionalities to meet regulatory requirements in different regions and bands. As there is a large available bandwidth of unlicensed spectrum, carrier selection is required for LAA nodes to select the carriers with low interference and that achieve good co-existence with other unlicensed spectrum deployments. For any technology, when deploying an additional node, the first rule for achieving high performance for the new node itself as well as for the existing nodes is to scan the available channels and select one that would receive least interference for the node itself and cause the least interference to existing nodes.

*Shared Cells*

The constantly increasing demand for high data rates in cellular networks requires new approaches to meet this expectation. A challenging question for operators is how to evolve their existing cellular networks so as to meet the requirement for higher data rates. In this respect, a number of approaches are possible, namely: i) increase the density of existing macro base stations, ii) increase cooperation between macro base stations, or iii) deploy smaller base stations in areas where high data rates are needed within a macro base station grid.

The last option is referred in the related literature as a "heterogeneous network" or "heterogeneous deployment" and the layer consisting of smaller base stations is termed a "micro" or "pico" layer. The notion of shared cells (also sometimes referred to as "same," "merged," or "soft cell") is one possible instantiation of a heterogeneous network. In the shared cell heterogeneous network, a number of Reception/Transmission (R/T) points share the same cell Identifier (ID) as well as cell specific signals such that, from a User Equipment device (UE) perspective, these smaller "cells" are seen as one effective cell.

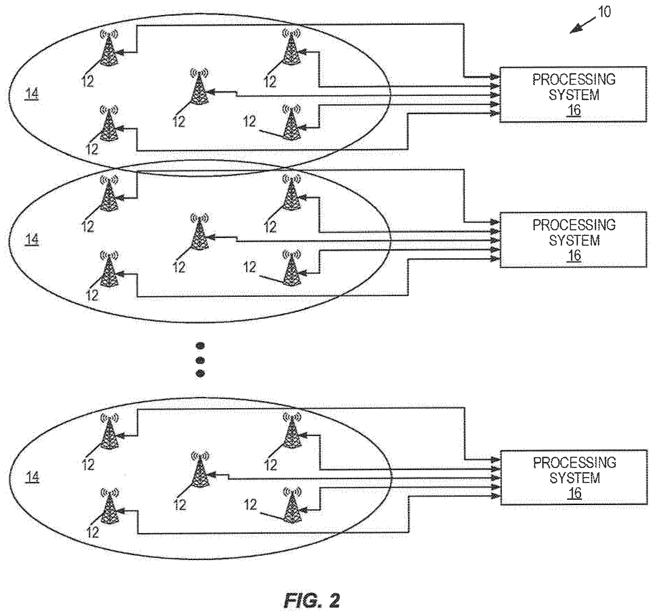

A simple instantiation of a shared cell instantiation, or deployment, of a heterogeneous network 10 is shown in Figure 2. As illustrated, several R/T points 12, each with their own coverage area, collectively serve a larger coverage area of a corresponding (shared) cell 14 that is identified with the cell ID. In Figure 2, there are N shared cells 14, each served by multiple R/T points 12 and having a corresponding centralized processing system 16. Typically, identical signals are transmitted at each R/T point 12 in a shared cell 14, though this is not required if there is sufficient Radio Frequency (RF) isolation between regions within the shared cell 14 and/or if the information is scheduled over the air so as to avoid a UE receiving conflicting, non-resolvable information.

The shared cell approach avoids the proliferation of cell IDs. Shared cells also avoid the high signaling load that would occur if each R/T point was a stand-alone cell and required hand-off operations as UEs move through the general coverage area. However, a UE connected to the shared cell cannot distinguish between the different R/T points.

In a shared cell deployment of a heterogeneous network, the location of a UE in a shared cell cannot be resolved to a particular R/T point because, e.g., signals transmitted by the UE are combined before processing. In other words, after combining the signals received by the various R/T points, the processing system for the shared cell is unable to determine which R/T point actually received the signal or received the strongest signal from the UE. As such, the location of the UE cannot be resolved to a particular R/T point.

Since the UE location cannot be resolved to a particular R/T point in a typical shared cell deployment, applying the shared cell configuration to an LAA deployment has the drawback of requiring simultaneous positive CCAs in all of the R/T points inside the cell. Due to the larger coverage area of the multiple R/T points, there is an increased probability of eNB LAA transmission collision with Wi-Fi™ transmissions.

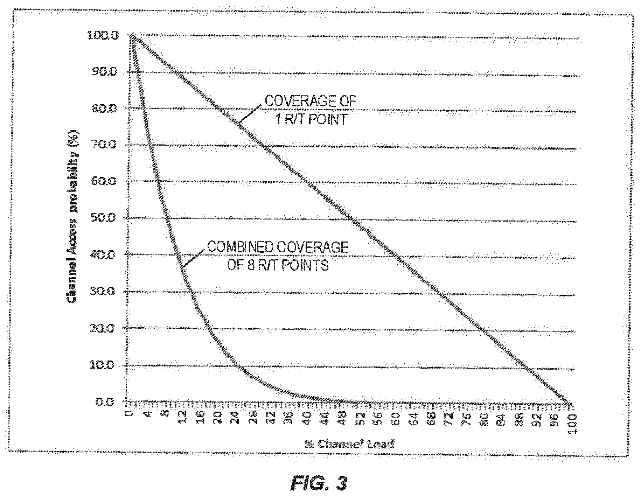

Figure 3 graphically illustrates the probability of successful CCA in a shared cell. Figure 3 shows how the probability of obtaining a successful CCA depends heavily on the coverage area of the combined R/T points for a given channel load, i.e. the collision or CCA domain. With eight times the coverage area (COMBINED COVERAGE OF 8 R/T POINTS line), the probability drops exponentially so that even at a channel load of ~25%, the probability of obtaining CCA for the entire area served by 8 R/T points is 10% compared to 75% for a single R/T point (COVERAGE OF 1 R/T POINT line).

In light of the discussion above, there is a need for systems and methods for implementing LAA, particularly with respect to a shared cell deployment.

Document US 2015/173056 A1 may be construed to disclose a technique pertaining to Channel state information (CSI) feedback in long term evolution (LTE) and LTE-Advanced (LTE-A) networks including unlicensed spectrum, in which a base station obtains clear channel assessment (CCA) result information from neighboring base stations, either directly or by determining such results from measurement or reports from user equipment (UE) served by the base station. The base station may then generate control signaling based on the CCA result information for transmission to the one or more UEs served by the base station.

Document "On Support of Multiple DL Data Transmission Starting Points", Ericsson, 3GPP draft R1-156047 may be construed to disclose considerations that should be taken into account on the possibilities of allowing several LAA data transmission starting points to account for different LBT outcomes. The following observations were made. Observation 1: To be economically competitive vis-à-vis other technologies in the unlicensed band, the LAA system design should not require excessive additional buffering hardware at either the eNB or the UE. Observation 2: L1 processing can adapt fixed transport block sizes to different amount of radio resources to accommodate multiple data transmission starting points based on the LBT outcome. It is not practical to adapt the transport block sizes based on the LBT outcome. Observation 3: When multiple LAA data transmission starting points are supported, the net data throughput benefit is mostly determined by the starting point allowing fewest radio resources. Observation 4: Considering data throughput benefits and implementation and distribution latency requirements, very limited number of starting points can be realistically supported. Observation 5: Floating-subframe concept increases the UE complexity and has issues related to the reliability and complexity of DL grant reception especially based on EPDCCH. Observation 6: Optimization for increasing number of candidates for starting data transmission on an LAA SCell should not compromise the spectral efficiency in subframes with full data transmission. Observation 7: Considering the impact on UE implementation and power saving, very limited number of starting points can be realistically supported. Observation 8: The start time of transmission can be controlled by an eNB to reduce the overhead by using freeze periods to control channel access. Observation 9: For DMRS-based PDSCH scheduled by EPDCCH, different transmission starting points can be supported with different configured sets of EPDCCH. For CRS-based PDSCH scheduled by PDCCH, only one transmission starting point is supported. Moreover, based on the investigation, the following proposals were made. UE behavior for reception of PDSCH should not rely on an assumption that a subframe includes full or partial DL transmission. Further, for CRS-based PDSCH scheduled by PDCCH, one transmission starting point is supported. Reception starting point is OS #0. In addition, for DMRS-based PDSCH scheduled by EPDCCH, up to two starting points can be supported (Reception starting points are configured by the eNB. Further, the UE can be configured with up two EPDCCH sets as in Rel-12. Each EPDCCH set can be configured with different starting OFDM symbols as in Rel-12. Moreover, the starting OFDM symbol for PDSCH can be dynamically signaled in the DL DCI message to the UE using the two "PDSCH RE Mapping and QCL Indicator" (PQI) bits as in Rel-12). Summary

According to the disclosure, there are provided methods, apparatuses, a computer program and a carrier according to the independent claims. Developments are set forth in the dependent claims.

Systems and methods are disclosed relating to implementing a shared cell configuration in a heterogeneous deployment of, e.g., a License Assisted Access (LAA) network. In some embodiments, a method of operation of a processing system to schedule downlink transmissions to wireless devices in a shared cell in an unlicensed frequency spectrum, the shared cell being served by multiple Reception/Transmission (R/T) points, comprises receiving independent Clear Channel Assessment (CCA) decisions from the R/T points serving the shared cell, each CCA decision from each R/T point being indicative of whether a CCA succeeded or failed at the R/T point. The method further comprises performing scheduling for one or more upcoming Transmit Time Intervals (TTIs) based on the CCA decisions received from the R/T points serving the shared cell. In this manner, the R/T points are independently enabled for transmission or muted, and the processing system is able to take the configuration of the R/T points into consideration when scheduling transmissions to wireless devices in the shared cell.

In some embodiments, for each TTI of the one or more upcoming TTIs, performing the scheduling comprises performing the scheduling based on forecasted probabilities of successful reception by wireless devices from the shared cell when only those R/T points for which the corresponding CCA decisions are indicative of a successful CCA are transmitting. Further, in some embodiments, for each wireless device of at least one of the plurality of wireless devices, the forecasted probability of successful reception by the wireless device from the shared cell is a function of, for each R/T point of the plurality of R/T points for which the corresponding CCA decision is indicative of a successful CCA, an individual forecasted probability of successful reception by the wireless device when the R/T point is transmitting.

Still further, in some embodiments, for each R/T point for which the corresponding CCA decision is indicative of a successful CCA, the individual forecasted probability of successful reception by the wireless device when the R/T point is transmitting is a function of at least one of: a number of previously successful transmissions to the wireless device when the R/T point is transmitting and a number of previously failed transmissions to the wireless device when the R/T is transmitting. In other embodiments, for each R/T point for which the corresponding CCA decision is indicative of a successful CCA, the individual forecasted probability of successful reception by the wireless device when the R/T point is transmitting is a function of a location of the wireless device relative to the R/T point.

In some embodiments, the method further comprises updating an ON/OFF status of each of the R/T points based on the CCA decisions such that an ON/OFF status of an R/T point is ON if a respective CCA decision is indicative of a CCA success and OFF if the respective CCA decision is indicative of a CCA failure. Performing scheduling for the one or more upcoming TTIs based on the CCA decisions received from the R/T points serving the shared cell comprises scheduling one or more wireless devices for downlink transmission in the shared cell for a TTI based on forecasted probabilities of successful reception by the one or more wireless devices from the shared cell in view of the ON/OFF statuses of the R/T points. For each wireless device of the one or more wireless devices, the forecasted probability of successful reception by the wireless device from the shared cell is a function of, for each R/T point having the ON status, an individual forecasted probability of successful reception by the wireless device when the R/T point is transmitting. Performing scheduling for the one or more upcoming TTIs based on the CCA decisions received from the R/T points serving the shared cell further comprises triggering downlink transmissions to the one or more wireless devices from the shared cell in the TTI; determining a success or failure of reception of the downlink transmission by each of the one or more wireless devices in the TTI; for each wireless device of the one or more wireless devices scheduled in the TTI, updating the individual forecasted probability of success reception by the wireless device for each of the R/T points having the ON status based on the success or failure of reception of the downlink transmission by the wireless device; and repeating the steps of scheduling, triggering, determining, and updating for one or more additional TTIs. Further, in some embodiments, the method further comprises periodically adjusting the individual forecasted probabilities.

In some embodiments, the method further comprises updating an ON/OFF status of each of the R/T points based on the CCA decisions such that an ON/OFF status of an R/T point is ON if a respective CCA decision is indicative of a CCA success and OFF if the respective CCA decision is indicative of a CCA failure. Performing scheduling for the one or more upcoming TTIs based on the CCA decisions received from the R/T points serving the shared cell comprises, for each wireless device of multiple wireless devices potentially scheduled in a TTI, updating an individual forecasted probability of successful reception by the wireless device for each of the R/T points having the ON status based on a location of the wireless device, wherein the individual forecasted probability of successful reception by the wireless device for a R/T point is a forecasted probability of successful reception by the wireless device when the R/T point is transmitting. Performing scheduling for the one or more upcoming TTIs based on the CCA decisions received from the R/T points serving the shared cell further comprises scheduling one or more of the wireless devices for downlink transmission in the shared cell for the TTI based on forecasted probabilities of successful reception by the one or more wireless devices from the shared cell in view of the ON/OFF statuses of the R/T points, wherein, for each wireless device of the one or more wireless devices, the forecasted probability of successful reception by the wireless device from the shared cell is a function of, for each R/T point of the plurality of R/T points having the ON status, the individual forecasted probability of successful reception by the wireless device when the R/T point is transmitting. Performing scheduling for the one or more upcoming TTIs based on the CCA decisions received from the R/T points serving the shared cell further comprises triggering downlink transmissions to the one or more wireless devices from the shared cell in the TTI and repeating the steps of updating, scheduling, and triggering for one or more additional TTIs.

In some embodiments, the method further comprises determining whether a same R/T point has failed CCA for a predetermined amount of time and, upon determining that the same R/T point has failed CCA for the predetermined amount of time, triggering channel reselection.

In some embodiments, the method further comprises receiving received signal strength measurements from the R/T points in the shared cell for multiple channels in the unlicensed frequency spectrum and performing channel selection for the shared cell based on the received signal strength measurements. Further, in some embodiments, performing channel selection comprises performing channel selection such that a channel selected for the shared cell is a channel having the weakest received signal strength measurements for all of the R/T points in the shared cell as a whole.

Embodiments of a processing system operable to schedule downlink transmissions to wireless devices in a shared cell in an unlicensed frequency band, the shared cell being served by a plurality of R/T points, are also disclosed.

Embodiments of a method of operation of an R/T point are also disclosed. In some embodiments, a method of operation of a R/T point of a shared cell in an unlicensed frequency spectrum, the R/T point being one of multiple R/T points serving the shared cell and the shared cell, comprises performing a CCA, the CCA being independent from CCAs performed by other R/T points of the multiple R/T points serving the shared cell. The method further comprises either transmitting a downlink signal for the shared cell or muting transmission from the R/T point according to a CCA decision that results from performing the CCA for the R/T point.

In some embodiments, the method further comprises sending the CCA decision to a processing system for the shared cell.

Embodiments of an R/T point of a shared cell in an unlicensed frequency spectrum, the R/T point being one of multiple R/T points serving the shared cell, are also disclosed.

Those skilled in the art will appreciate the scope of the present disclosure and realize additional aspects thereof after reading the following detailed description of the embodiments in association with the accompanying drawing figures.

Brief Description of the Drawings

The accompanying drawing figures incorporated in and forming a part of this specification illustrate several aspects of the disclosure, and together with the description serve to explain the principles of the disclosure.

Figure 1 illustrates the large amount of spectrum available in unlicensed bands around the world;
Figure 2 illustrates one example of a shared cell instantiation, or deployment, of a heterogeneous network;
Figure 3 graphically illustrates the probability of successful Clear Channel Assessment (CCA) in a shared cell;
Figure 4 illustrates a License Assisted Access (LAA) network that includes a shared cell served by multiple Reception/Transmission (R/T) points in which the R/T points perform independent CCAs according to some embodiments of the present disclosure;
Figure 5 illustrates the operation of the R/T points and the processing system of the shared cell of Figure 4 according to some embodiments of the present disclosure;
Figure 6 is a flow chart that illustrates the operation of the processing system and, in particular, the baseband processing unit of the processing system to perform scheduling based on forecasted probabilities of successful reception, where the forecasted probabilities of successful reception are determined based on historical or statistical information, according to some embodiments of the present disclosure;
Figure 7 is a flow chart that illustrates the operation of the processing system and, in particular, the baseband processing unit of the processing system to perform scheduling based on forecasted probabilities of successful reception, where the forecasted probabilities of successful reception are determined based distances between User Equipment devices (UEs) and the R/T points that are transmitting, according to some embodiments of the present disclosure;

Figure 8 illustrates the operation of the processing system and the R/T points to perform a channel selection procedure by which the channel on which the R/T points are to operate is selected according to some embodiments of the present disclosure;

Figure 9 illustrates a process for triggering channel reselection according to some embodiments of the present disclosure;

Figures 10 and 11 illustrate embodiments of the processing system of the shared cell; and

Figures 12 and 13 illustrate embodiments of an R/T point.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

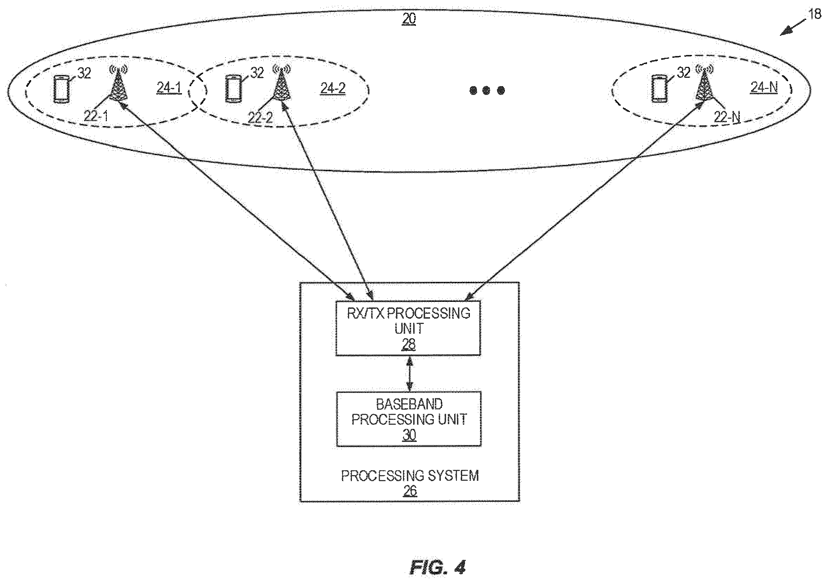

Systems and methods are disclosed for implementing a shared cell configuration in a heterogeneous deployment of a License Assisted Access (LAA) network. In this regard, Figure 4 illustrates a LAA network 18 that includes a shared cell 20 served by multiple Reception/Transmission (R/T) points 22-1 through 22-N (generally referred to herein collectively as R/T points 22 and individually as R/T point 22). The R/T points 22-1 through 22-N have corresponding coverage areas 24-1 through 24-N (generally referred to herein collectively as coverage areas 24 and individually as coverage area 24).

The shared cell 20 is controlled by a processing system 26. The processing system 26 includes a Receive/Transmit (RX/TX) processing unit 28 and a baseband processing unit 30. The RX/TX processing unit 28 includes hardware or a combination of hardware and software that operates to, e.g., combine signals received by the R/T points 22 to provide a combined receive signal for processing by the baseband processing unit 30 and send a transmit signal for the shared signal to each of the R/T points 22 for transmission. The baseband processing unit 30 includes hardware or a combination of hardware and software (e.g., one or more processors (e.g., one or more Central Processing Units (CPUs), Application Specific Integrated Circuits (ASICs), Field Programmable Gate Arrays (FPGAs), and/or the like) and memory or other non-transitory computer-readable medium storing software instructions that are executable by the at least one processor). The baseband processing unit 30 operates to process the combined receive signal from the RX/TX processing unit 28 and to send the transmit signal for the shared cell 20 to the RX/TX processing unit 28. The baseband processing unit 30 includes a scheduler (not shown) (i.e., provides a scheduling function) by which downlink and/or uplink transmissions in the shared cell 20 are scheduled.

In the typical LAA transmission, the radio will perform Clear Channel Assessment (CCA) to make sure that the channel is available before beginning the transmission. In the shared cell 20, the problem is complicated by the fact that there are several R/T points 22 and the probability of collisions is increased. As discussed below in detail, in order to lower the probability of collision, each R/T point 22 performs an individual (also referred to herein as independent) CCA for that particular R/T point 22 and makes an independent CCA decision (i.e., either CCA success or CCA failure) for that R/T point 22. Based on their respective CCA decisions, the R/T points 22 in the shared cell 20 individually, or independently, decide whether or not to transmit. Hence, only a subset of the R/T points 22 that have a successful CCA will transmit, while the other R/T points 22 are muted. In this manner, the collision domain is reduced from the full coverage area of the shared cell 20 to the coverage area of a single R/T point 22 and, as a result, the probability of obtaining a successful CCA for the shared cell 20 is increased.

The baseband processing unit 30, where the scheduler for the shared cell 20 resides, will receive feedback on the CCA decisions (also referred to herein as the ON/OFF states or statuses) of the R/T points 22 (i.e., transmitting (ON) or muted (OFF)). In some embodiments, the scheduler uses this information for an advanced scheduling scheme that takes into the account the CCA decisions of the individual R/T points 22. For example, in some embodiments, User Equipment devices (UEs) 32 are scheduled based on a forecasted probability of successful reception by the UEs 32 in view of the subset of the R/T points 22 that will be transmitting as determined by the independent CCA decisions of the R/T points 22. As an example, in Figure 4, if the R/T point 22-1 is transmitting and R/T point 22-2 is muted, the scheduler should schedule the UE 32-1, and the scheduler should not schedule UE 32-2.

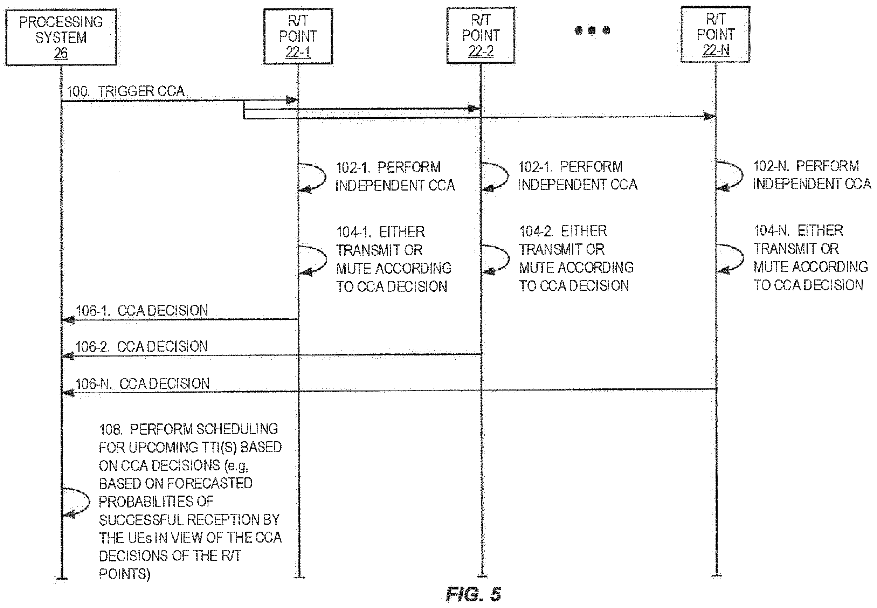

Figure 5 illustrates the operation of the R/T points 22 and the processing system 26 according to some embodiments of the present disclosure. As illustrated, in some embodiments, the processing system 26 triggers CCA by the R/T points 22-1 through 22-N (step 100). This triggering may be performed in any suitable manner. For instance, the triggering may be an implicit triggering of CCA by the R/T points 22-1 through 22-N by the processing system 26 sending a transmit signal to the R/T points 22-1 through 22-N for transmission for, e.g., a Transmit Time Interval (TTI).

This may be a transmission of an initial signal or transmission of user data. As one particular example, a command may be sent to all R/T points 22-1 through 22-N to start performing CCA at the beginning of the next subframe. However, the triggering of the CCA by the R/T points 22-1 through 22-N is not limited thereto.

Upon the occurrence of the triggering event, the R/T points 22-1 through 22-N perform independent CCAs (steps 102-1 through 102-N). In other words, each R/T point 22 performs an independent CCA on an "observed" channel in an unlicensed frequency spectrum (e.g., the 5 Gigahertz (GHz) frequency spectrum). Here, the observed channel is a channel on which the R/T points 22 desire to transmit for the shared cell 20. The details of the CCAs performed by the R/T points 22-1 through 22-N may vary depending on the particular implementation. However, in general, the R/T points 22-1 through 22-N monitor an observed channel (i.e., the channel on which transmission is to be performed) for one or more consecutive observation periods to determine whether the observed channel is clear (i.e., not in use within the coverage area of the R/T point 22). Notably, in some embodiments, CCA uses a random back-off component to ensure that different users of the channel do not start transmitting at the same time. In this case, the R/T points 22-1 through 22-N use the same random back-off component, or number to ensure that some of the R/T points 22 would complete CCA before other R/T points 22, which in turn will block the other R/T points 22 (i.e., the other R/T points 22 will consider the channel as occupied as a result of the transmissions from the R/T points 22 that completed CCA earlier).

For each R/T point 22, the result of the CCA performed by the R/T point 22 is a CCA decision for the R/T point 22. The CCA decision is either a CCA success (i.e., the channel is clear and, as such, the R/T point 22 is permitted to transmit) or a CCA failure (i.e., the channel is not clear and, as such, the R/T point 22 is not permitted to transmit). The CCA decisions are thus indicative of ON/OFF statuses of the respective R/T points 22 (i.e., an R/T point 22 having a CCA success has an ON status in that the R/T point 22 is permitted to and does transmit, whereas an R/T point 22 having a CCA failure has an OFF status in that the R/T point 22 is not permitted to and does not transmit). The R/T points 22-1 through 22-N then either transmit or are muted (i.e., do not transmit) in accordance with their respective CCA decisions (steps 104-1 through 104-N). In this manner, only a subset of the R/T points 22 for which the respective CCAs resulted in CCA success decisions transmit, while the other R/T points 22 are muted.

In some embodiments, the R/T points 22-1 through 22-N report their respective CCA decisions to the processing system 26 (steps 106-1 through 106-N). The processing system 26 performs scheduling (i.e., downlink scheduling) for one or more upcoming TTIs based on the CCA decisions of the R/T points 22-1 through 22-N (step 108). In some embodiments, the processing system 26 performs downlink scheduling based on forecasted probabilities of successful reception by the UEs 32 in view of the CCA decisions (i.e., the ON/OFF statuses) of the R/T points 22. For example, the processing system 26 may perform downlink scheduling such that only those UEs 32 that are forecasted, or predicted, to be able to successfully receive downlink transmissions from the subset of "ON" R/T points 22 are scheduled.

As discussed below in detail, in some embodiments, the processing system 26 maintains, for each UE 32 and R/T point 22 combination, an individual forecasted probability of successful reception by that UE 32 when that R/T point 22 is transmitting based on historical information (e.g., indications of previous successful transmissions and/or previous failed transmissions for the UE 32 and R/T point 22 combination). Then, for each UE 32, the forecasted probability of successful reception by that UE 32 from the shared cell 20 when a particular subset of the R/T points 22 are transmitting is based on (e.g., a sum of) the individual forecasted probabilities of successful reception by the UE 32 when each individual R/T point 22 in the subset is transmitting.

In other embodiments, the processing system 26 utilizes positions, or locations, of the UEs 32 relative to the R/T points 22 in the subset of the R/T points 22 that are transmitting to determine forecasted probabilities of successful reception by the UEs 32. More specifically, in some embodiments, the processing system 26 determines, for each UE 32 and R/T point 22 combination, an individual forecasted probability of successful reception by that UE 32 when that R/T point 22 is transmitting based on a position, or location, of the UE 32 relative to the R/T point 22. Then, for each UE 32, the forecasted probability of successful reception by that UE 32 from the shared cell 20 when a particular subset of the R/T points 22 are transmitting is based on (e.g., a sum of) the individual forecasted probabilities of successful reception by the UE 32 when each individual R/T point 22 in the subset is transmitting.

As described above, in some embodiments, the processing system 26 performs scheduling based on forecasted probabilities of successful reception by the UEs 32 from the shared cell 20 given the subset of the R/T points 22 that are currently ON (i.e., given the subset of the R/T points 22 reporting CCA success). As further described above, in some embodiments, the forecasted probabilities of successful reception by the UEs 32 from the shared cell 20 are based on historical or statistical information maintained by the processing system 26. More specifically, in some embodiments, the processing system 26 monitors successful transmissions (e.g., Hybrid Automatic Repeat Request (HARQ) Acknowledgement (ACK)) and/or unsuccessful transmissions (e.g., HARQ Negative Acknowledgment (NACK) or no HARQ response) for each UE 32 and R/T point 22 combination, or pair. Using this information, the processing system 26 is able to determine (e.g., forecast or predict) which UEs 32 are most likely to successfully receive a downlink transmission from the shared cell 20 given the current subset of the R/T points 22 that are ON (i.e., enabled for transmission as a result of successful CCA decisions). For instance, relative values may be assigned to the UE 32 and R/T point 22 combinations based on the respective number of successful transmissions versus unsuccessful transmissions for that combination in the recent past (e.g., in the last few seconds).

In some particular embodiments, for each TTI or subframe, the processing system 26 (and in particular the baseband processing unit 30) receives information about the subset of R/T points 22 that is transmitting. The processing system 26 (and in particular the baseband processing unit 30) also knows the set of scheduled UEs 32 and the HARQ states of the UEs 32. The processing system 26 (and in particular the baseband processing unit 30) maintains, for each UE$_i$ and R/T point RT$_k$ combination, a forecasted probability of successful reception by UE$_i$ when the R/T point RT$_k$ is transmitting:

*forecast*(UE$_i$, RT$_k$).

Assume that there are *p* R/T points 22 (i.e., k = 1, ..., *p*) in the shared cell 20 for a particular subframe and *m* scheduled UEs 32 (i.e., i = 1, ..., *m*), where both *p* and *m* are greater than or equal to 2 and, in practical implementations, potentially much greater than 2. In each TTI or subframe, the baseband processing unit 30 allocates a fixed amount of credit points *SC* that are to be distributed to all the UEs 32 that have successfully received data in that subframe. For example, if the UE$_i$ was scheduled and the R/T point RT$_k$ was transmitting during that subframe, then:

- If data was successfully received by UE$_i$, then:
  *forecast(UE$_i$, RT$_k$) += SC/m/p*
- If a HARQ retransmission is required, then
  *forecast(UE$_i$, RT$_k$) -= SC/m/p*

A potential enhancement is to use the HARQ retransmission reason to assign different forecast credit values, with the highest credit value being assigned to the case where no ACK or NACK was received for the original transmission, which is a good indication that the UE has probably not received the transmission. After an initial ramp-up time, the individual forecasted probabilities of successful reception will start to predict which UEs 32 are most likely to receive data given a particular subset of R/T points 22 that are enabled to transmit. In particular, for UE$_i$, the forecasted probability of successful reception by UE$_i$ from the shared cell 20 for a given subset of R/T points 22 that are ON is, at least in some embodiments:

$$\text{ProbabilityOfSuccessfulReception}\big(\text{UE}_i, \{RT_k\}_{k=1,...,p}\big) = \sum_{k=1}^{p} forecast(UE_i, RT_k)$$

Also, since the UEs 32 can move between the coverage of different R/T points 22, in some embodiments, the processing system 26 ages the individual forecasted probabilities of successful reception for the UE 32 and R/T point 22 combinations periodically (e.g., every few seconds) by, e.g., halving them.

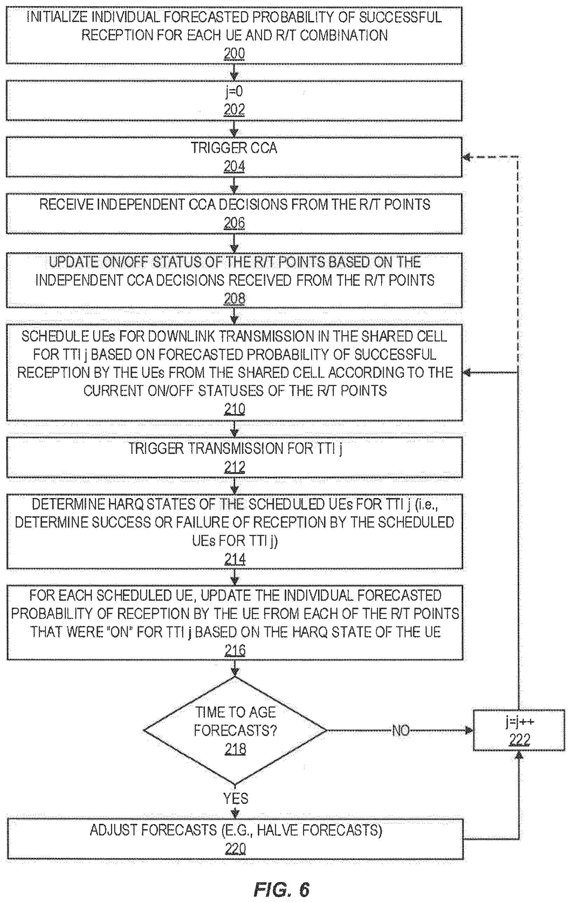

Figure 6 is a flow chart that illustrates the operation of the processing system 26 and, in particular, the baseband processing unit 30 of the processing system 26 to perform scheduling based on forecasted probabilities of successful reception, where the forecasted probabilities of successful reception are determined based on historical or statistical information, according to some embodiments of the present disclosure. As illustrated, the processing system 26 initializes individual forecasted probabilities of successful reception for each UE 32 and R/T point 22 combination (step 200). The individual forecasted probabilities of successful reception are initialized to some predefined value. For example, if the individual forecasted probabilities of successful reception can range from 0 to 100, then the individual forecasted probabilities of successful reception may be initialized to, e.g., 100 or some other suitable value for the particular implementation. In this example, a TTI or subframe counter j is set to zero (step 202).

As discussed above, the processing system 26 triggers CCA at each of the R/T points 22 (step 204) and, as a result, receives independent, or individual, CCA decisions from the R/T points 22 (step 206). In this example, the processing system 26 updates an ON/OFF status of each of the R/T points 22 based on the respective CCA decisions (step 208).

The processing system 26, and in particular the scheduler of the baseband processing unit 30, then schedules one or more UEs 32 for downlink transmission in the shared cell 20 in TTI j based on forecasted probabilities of successful reception of the UEs 32 in the shared cell 20 according to (e.g., given) the subset of the R/T points 22 having ON statuses (step 210). As discussed above, for each UE$_i$ of one or more UEs 32 potentially to be scheduled in TTI (or subframe) *j*, the processing system 26 computes:

$$\text{ProbabilityOfSuccessfulReception}\big(\text{UE}_i, \{RT_k\}_{k=1,...,p}\big) = \sum_{k=1}^{p} forecast(UE_i, RT_k)$$

for the given subset of the R/T points 22 having ON statuses (denoted here as $\{RTk\}_{k=1,...,p}$). The processing system 26 then selects the UEs 32 having, e.g., the highest probabilities of successful reception from the shared cell 20 given the subset of R/T points 22 that are currently ON (or some subset of such UEs 32) to be scheduled for TTI $j$. As one example alternative, the processing system 26 may select the UEs 32 having probabilities of successful reception from the shared cell 20 that are greater than a predefined threshold (or some subset of such UEs) as the UEs 32 to be scheduled for TTI $j$.

The processing system 26 then triggers, or initiates, transmission to the scheduled UEs 32 in TTI $j$ (step 212). The processing system 26 then determines, in this example, a HARQ state for each of the scheduled UEs (step 214). The HARQ state for a UE 32 may be, e.g., a state in which a HARQ ACK was received from the UE 32 for the transmission to the UE 32 in TTI $j$ (i.e., a successful transmission) or a state in which either a HARQ NACK was received from the UE 32 or no HARQ response was received from the UE 32 for the transmission to the UE 32 in TTI $j$ (i.e., a failed transmission).

The processing system 26 then updates the individual forecasted probabilities of successful reception for each UE 32 and R/T point 22 combination for the UEs 32 scheduled in TTI $j$ and the R/T points 22 transmitting in TTI $j$ (step 216). Thus, according to the embodiment described above, for each combination of $UE_i$ of the UEs 32 scheduled in TTI $j$ and R/T point $RT_k$ of the R/T points 22 transmitting in TTI $j$, the processing system 26 updates the individual forecasted probability of successful reception by $UE_i$ when R/T point $RT_k$ is transmitting as:

- If data was successful received by $UE_i$, then:
  $forecast(UE_i, RT_k)$ += SC/m/p
- If a HARQ retransmission is required, then
  $forecast(UE_i, RT_k)$ -= SC/m/p

where, as described above, SC is a predefined value, $m$ is the number of scheduled UEs 32 for TTI $j$, and p is the number of R/T points 22 transmitting in TTI $j$.

Optionally, in some embodiments, the processing system 26 determines whether it is time to age the individual forecasted probabilities of successful reception for the different UE 32 and R/T point 22 combinations (step 218). Aging may be performed periodically (e.g., every few seconds). If so, the processing system 26 ages the individual forecasted probabilities of successful reception for the different UE 32 and R/T point 22 combinations by adjusting the values in some predefined manner (e.g., reducing the values by half) (step 220). Whether proceeding from step 218 or step 220, the processing system 26 then increments the TTI or subframe counter j (step 222) and then the process returns to step 210. Returning to step 210 assumes that CCA is not performed for every TTI or subframe. Alternatively, the process may return to step 204 such that CCA is repeated. CCA may be repeated as often as needed or desired given the particular CCA scheme or requirements.

In the embodiments described above with respect to Figure 6, the individual probabilities of successful reception for the different UE 32 and R/T point 22 combinations are determined based on historical or statistical information. However, in some other embodiments, the individual probabilities of successful reception for the different UE 32 and R/T point 22 combinations are determined based on the positions, or locations, of the UEs 32 with respect to known locations of the R/T points 22. In this regard, in some embodiments, the processing system 26 and, in particular the baseband processing unit 30, uses UE positioning information (also referred to herein as location information) and known positioning information for the R/T points 22 to determine which of the UEs 32 are within coverage (i.e., have the highest probability of successful reception) of the subset of R/T points 22 that are transmitting. The processing system 26 then gives higher scheduling priority to those UEs 32.

In one particular embodiment, the processing system 26 computes the distances between the UEs 32 and the R/T points 22 that are transmitting. In other words, for each UE 32 and R/T point 22 combination for those UEs 32 that are potentially to be scheduled and each R/T point 22 that is transmitting, the processing system 26 computes a distance between the UE 32 and the R/T point 22 for that UE 32 and R/T point 22 combination. In this case, the distance between a UE 32 and an R/T point 22 is also referred to as forecasted probability of successful reception by the UE 32 when the R/T point 22 is transmitting in that the likelihood that the UE 32 will successfully receive a transmission from the R/T point 22 increases as the distance between the UE 32 and the R/T point 22 decreases, and vice versa. In other words, here, the lower the value of the distance, the greater the probability of successful reception. Thus:

$$forecast(UE_i, RT_k) = 1/distance\ (UE_i, RT_k).$$

Then, for each of the UEs 32 to potentially be scheduled (i.e., for each $UE_i$ for i = 1,...,$m$, where m is the number of UEs 32 to potentially be scheduled for a TTI or subframe), the processing system 26 computes a forecasted probability of successful reception by the UE 32 given the current subset of R/T points 22 that are transmitting (according to their independent CCA decisions) as:

$$ProbabilityOfSuccessfulReception\left(\text{UE}_i, \{RT_k\}_{k=1,\ldots,p}\right)$$

$$= \text{MAX}\left(forecast\left(\text{UE}_i, \{RT_k\}_{k=1,\ldots,p}\right)\right) \ and\ to\ simplify$$

$$= 1/MIN\left(distance\left(\text{UE}_i, \{RT_k\}_{k=1,\ldots,p}\right)\right)$$

where, again, p is the number of R/T points 22 transmitting in the TTI or subframe being scheduled.

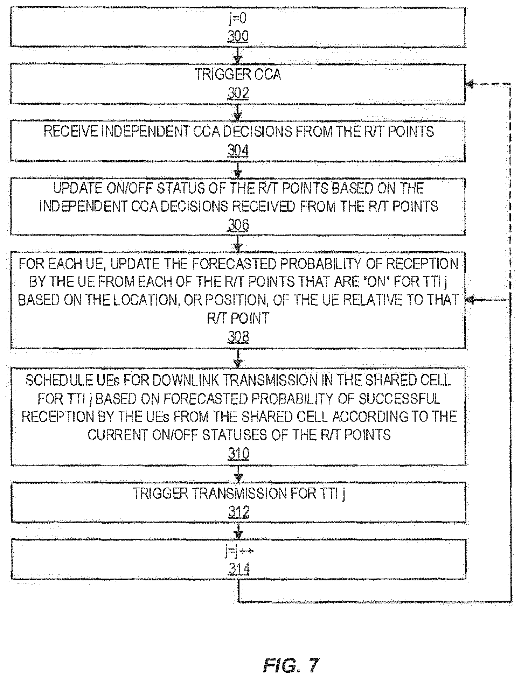

Figure 7 is a flow chart that illustrates the operation of the processing system 26 and, in particular, the baseband processing unit 30 of the processing system 26 to perform scheduling based on forecasted probabilities of successful reception, where the forecasted probabilities of successful reception are determined based on distances between the UEs 32 and the R/T points 22 that are transmitting, according to some embodiments of the present disclosure. As illustrated, in this example, a TTI or subframe counter j is set to zero (step 300). As discussed above, the processing system 26 triggers CCA at each of the R/T points 22 (step 302) and, as a result, receives independent, or individual, CCA decisions from the R/T points 22 (step 304). In this example, the processing system 26 updates an ON/OFF status of each of the R/T points 22 based on the respective CCA decision (step 306).

The processing system 26 then updates the individual forecasted probability of successful reception for each UE 32 and R/T point 22 combination for the UEs 32 to potentially be scheduled in TTI *j* and the R/T points 22 transmitting in TTI *j* based on the location, or position, of the UEs 32 relative to the known location, or position, of the R/T point 22 (step 308). Thus, according to the embodiment described above, for each combination of $\text{UE}_i$ of the UEs 32 to potentially be scheduled in TTI *j* and R/T point $RT_k$ of the R/T points 22 transmitting in TTI *j*, the processing system 26 updates the individual forecasted probability of successful reception by $\text{UE}_i$ when R/T point $RT_k$ is transmitting as:

$$forecast(UE_i, RT_k) = 1/distance(UE_i, RT_k).$$

The processing system 26, and in particular the scheduler of the baseband processing unit 30, then schedules one or more UEs 32 for downlink transmission in the shared cell 20 in TTI *j* based on forecasted probabilities of successful reception by the UEs 32 in the shared cell 20 according to (e.g., given) the subset of the R/T points 22 having ON statuses (step 310). As discussed above, for each $\text{UE}_i$ of one or more UEs 32 potentially to be scheduled in TTI (or subframe) *j*, the processing system 26 computes:

$$ProbabilityOfSuccessfulReception\left(\text{UE}_i, \{RT_k\}_{k=1,\ldots,p}\right)$$

$$= \text{MAX}\left(forecast\left(\text{UE}_i, \{RT_k\}_{k=1,\ldots,p}\right)\right) \ and\ to\ simplify$$

$$= 1/MIN\left(distance\left(\text{UE}_i, \{RT_k\}_{k=1,\ldots,p}\right)\right)$$

for the given subset of the R/T points 22 having ON statuses (denoted here as $\{RT_k\}_{k=1,\ldots,p}$). The processing system 26 then selects the UEs 32 having, e.g., the highest probabilities of successful reception from the shared cell 20 given the subset of R/T points 22 that are currently ON (or some subset of such UEs 32) to be scheduled for TTI *j*. Importantly, in the example above, the UEs 32 having the highest (or best) probability of successful reception from the shared cell 20 are those UEs for which the computed "ProbabilityOfSuccessfulReception" is the highest. As one example alternative, the processing system 26 may select the UEs 32 having probabilities of successful reception from the shared cell 20 that are better than a predefined threshold (or some subset of such UEs) as the UEs 32 to be scheduled for TTI *j*.

The processing system 26 then triggers, or initiates, transmission to the scheduled UEs 32 in TTI *j* (step 312). The processing system 26 then increments the TTI or subframe counter *j* (step 314) and then the process returns to step 308. Returning to step 308 assumes that CCA is not performed for every TTI or subframe. Alternatively, the process may return to step 302 such that CCA is repeated. CCA may be repeated as often as needed or desired given the particular CCA scheme or requirements.

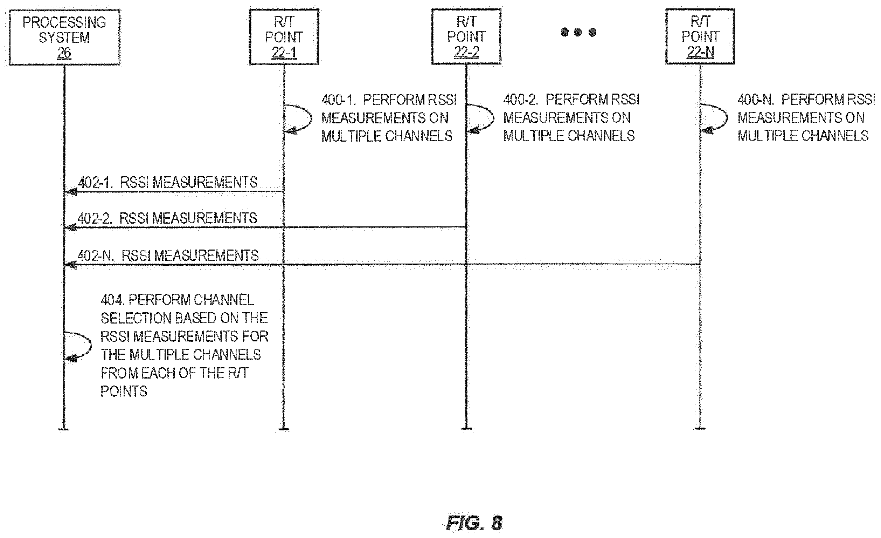

The embodiments described thus far relate to the independent CCAs performed by the R/T points 22 and the use of the resulting CCA decisions for scheduling for a particular channel. Figure 8 illustrates the operation of the processing system 26 and the R/T points 22 to perform a channel selection procedure by which the channel on which the R/T points 22 are to operate is selected according to some embodiments of the present disclosure. This channel selection procedure may be performed by the processing system 26 prior to the process of, e.g., Figures 5, 6, or 7.

As illustrated, the R/T points 22 each perform Received Signal Strength Indicator (RSSI) measurements on multiple channels in the unlicensed frequency spectrum (steps 400-1 through 400-N). Note that while RSSI is used here, other types of received signal strength measurements may be used. The R/T points 22 send the RSSI measurements for the multiple channels to the processing system 26 (steps 402-1 through 402-N). The processing system 26 then performs channel selection based on the RSSI measurements received from the R/T points 22 (step 404). More specifically, the processing system 26 selects the channel taking into consideration the RSSI measurements from all of the R/T points 22. In some embodiments, the processing system 26 selects the best channel for the R/T points 22 as a whole, which may not be the best channel for any particular R/T point 22. For example, the processing system 26 may select a channel that has an RSSI that is less than a predefined or configurable RSSI threshold for all of the R/T points 22.

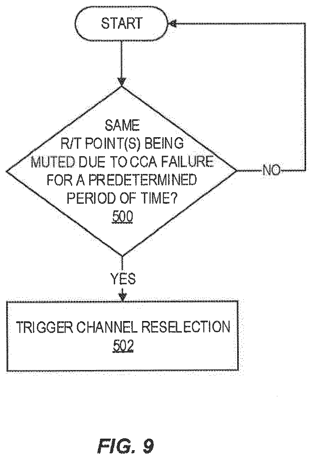

In some embodiments, the channel selection procedure of Figure 8 is performed only once. However, in other embodiments, the channel selection procedure of Figure 8 may be repeated as desired. In some particular embodiments, the channel selection procedure of Figure 8 is repeated when any R/T point(s) 22 are consecutively muted due to interference (i.e., CCA failure) for a predetermined period of time. In this regard, Figure 9 illustrates a process for triggering channel reselection according to some embodiments of the present disclosure. This process may be performed by, e.g., the processing system 26, but is not limited thereto. For instance, each R/T point 22 may alternatively perform the procedure of Figure 9. Note, however, that if an R/T point 22 triggers channel reselection, channel reselection is a system wide process (i.e., the R/T point 22 will not, but itself, perform channel reselection).

As illustrated in Figure 9, a decision is made as to whether the same R/T point(s) 22 has been muted (i.e., OFF status) due to CCA failure for a predetermined period of time (step 500). The predetermined period of time may, e.g., be defined by the network operator, statically defined (e.g., by a standard), or the like. If not, the process returns to step 500. Conversely, if the same R/T point(s) 22 has been muted for the predetermined amount of time, channel reselection is triggered (step 502). Upon triggering channel reselection, a channel selection procedure is performed (e.g., the procedure of Figure 8 is performed).

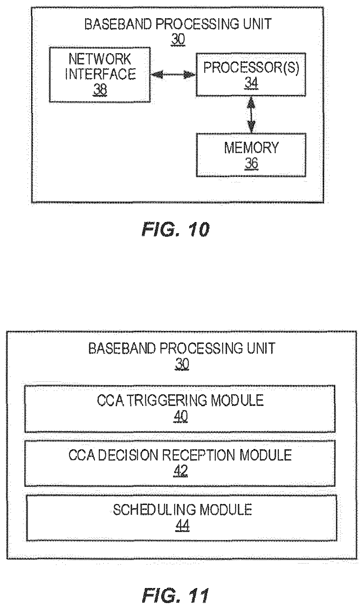

Figure 10 illustrates the baseband processing unit 30 of the processing system 26 according to some embodiments of the present disclosure. As illustrated, the baseband processing unit 30 includes one or more processors 34 (e.g., CPU(s), ASIC(s), FPGA(s), and/or the like), memory 36, and a network interface 38 (e.g., fiber optic or other wired or wireless interface to the RX/TX processing unit 28). In some embodiments, the functionality of the processing system 26, and in particular the functionality of the baseband processing unit 30, is implemented at least partially in software, which is stored in the memory 36 and executed by the processor(s) 34.

In some embodiments, a computer program including instructions which, when executed by at least one processor, causes the at least one processor to carry out the functionality of the processing system 26 and, in particular, the baseband processing unit 30 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 36).

Figure 11 is a block diagram of the baseband processing unit 30 according to some other embodiments of the present disclosure. As illustrated, the baseband processing unit 30 includes a CCA triggering module 40, a CCA decision reception module 42, and a scheduling module 44, each of which is implemented in software. The CCA triggering module 40 operates to trigger the independent CCAs at the R/T points 22. The CCA decision reception module 42 operates to receive (via an appropriate network/communication interface of the baseband processing unit 30, which is not shown) the CCA decisions from the R/T points 22. The scheduling module 44 performs scheduling for the shared cell 20 based on the CCA decisions received from the R/T points 22, as described above.

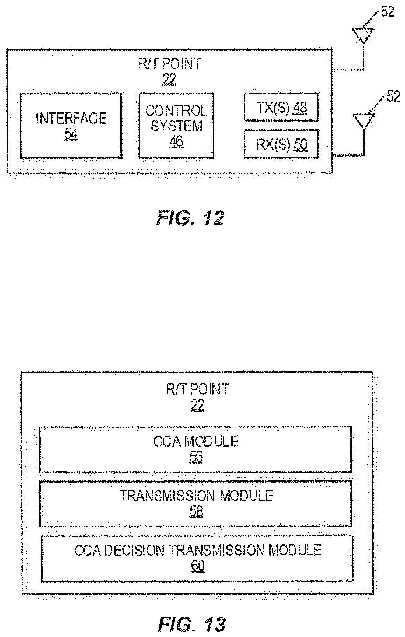

Figure 12 illustrates an R/T point 22 according to some embodiments of the present disclosure. As illustrated, the R/T point 22 includes a control system 46, which may include, for example, one or more processors (e.g., CPU(s), ASIC(s), FPGA(s), and/or the like) and memory. The R/T point 22 also includes one or more transmitters 48 and one or more receivers 50 connected to one or more antennas 52. The transmitter(s) 48 and the receiver(s) 50 include various hardware components such as, for example, filters, amplifiers, etc. The R/T point 22 also includes an interface 54 that communicatively couples the R/T point 22 to the processing system 26.

In some embodiments, a computer program including instructions which, when executed by at least one processor, causes the at least one processor to carry out at least some of the functionality of the R/T point 22 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 13 is a block diagram of the R/T point 22 according to some other embodiments of the present disclosure. As illustrated, the R/T point 22 includes a CCA module 56, a transmission module 58, and a CCA decision transmission module 60, each of which is implemented in software. The CCA module 56 operates to perform CCAs for the R/T point 22. The transmission module 58 operates to either enable the R/T point 22 for transmission or mute the R/T point 22 according to the CCA decision resulting from the CCA performed by the CCA module 56. The CCA decision transmission module 60 operates to transmit (via an associated interface of the R/T point 22, not shown) a CCA decision resulting from the CCA performed by the CCA module 56 to the processing system 26 of the shared cell 20, as described above.

The embodiments described herein provide a number of benefits and advantages over conventional systems. While not being limited to or by any particular benefit or advantage, some examples are as follows. Embodiments of the present disclosure allow an increased channel access probability in a shared cell configuration by performing independent CCA for each R/T point. Embodiments of the present disclosure allow better usage of the shared spectrum by scheduling only the UEs that have a high probability to be reached by the subset of the transmitting R/T points in a shared cell hence avoiding wasting Physical Resource Blocks (PRBs) on the UEs that have a low probability to receive the transmission and would trigger HARQ re-transmissions.

The following acronyms are used throughout this disclosure.

| | |
|---|---|
| • 3GPP | Third Generation Partnership Project |
| • ACK | Acknowledgement |
| • AP | Access Point |
| • ASIC | Application Specific Integrated Circuit |
| • CCA | Clear Channel Assessment |
| • CPU | Central Processing Unit |
| • dBm | Decibel-Milliwatt |
| • DFS | Dynamic Frequency Selection |
| • EIRP | Equivalent Isotropically Radiated Power |
| • eNB | Enhanced or Evolved Node B |
| • EPC | Evolved Packet Core |
| • FCC | Federal Communications Commission |
| • FPGA | Field Programmable Gate Array |
| • GHz | Gigahertz |
| • HARQ | Hybrid Automatic Repeat Request |
| • ID | Identifier |
| • IMT | International Mobile Telecommunication |
| • LAA | License Assisted Access |
| • LTE | Long Term Evolution |
| • ms | Millisecond |
| • NACK | Negative Acknowledgement |
| • PRB | Physical Resource Block |
| • R&TTE | Radio and Telecommunications Terminal Equipment |
| • RF | Radio Frequency |
| • RSSI | Received Signal Strength Indicator |
| • R/T | Reception/Transmission |
| • RX/TX | Receive/Transmit |
| • SCell | Secondary Cell |
| • TR | Technical Report |
| • TTI | Transmit Time Interval |
| • UE | User Equipment |
| • US | United States |

**Claims**

1. A method of operation of License Assisted Access, LAA, network (18) comprising i) a plurality of Reception/Transmission, R/T, points (22, 22-1, 22-2, 22-N) of a shared cell (20) in an unlicensed frequency spectrum, each R/T point (22) being one of the plurality of R/T points (22) serving the shared cell (20), and ii) a processing system (26) to schedule downlink transmissions to wireless devices (32) in the shared cell (20) in the unlicensed frequency spectrum, the method comprising:

performing (102, 102-1, 102-2, 102-N), by each R/T point, a Clear Channel Assessment, CCA, the CCA being independent from CCAs performed by other R/T points (22) of the multiple R/T points (22) serving the shared cell (20);

either transmitting (104, 104-1, 104-2, 104-N), by each R/T point, a downlink signal for the shared cell (20) or muting transmission from the R/T point (22) (104) according to a CCA decision that results from performing the CCA for the R/T point (22);

receiving (106-1, 106-2, 106-N), by the processing system, the independent CCA decisions from the plurality of R/T points (22) serving the shared cell (20), each CCA decision from each R/T point (22) being indicative of whether a CCA succeeded or failed at the R/T point (22); and

performing (108), by the processing system, scheduling for one or more upcoming Transmit Time Intervals, TTIs, based on the CCA decisions received from the plurality of R/T points (22) serving the shared cell (20).

2. The method of claim 1 further comprising sending (106, 106-, 160-2, 106-N), by each R/T point, the CCA decision to a processing system (26) for the shared cell (20).

3. A method of operation of a processing system (26) to schedule downlink transmissions to wireless devices (32) in a shared cell (20) in an unlicensed frequency spectrum, the shared cell (20) being served by a plurality of Reception/Transmission, R/T, points (22), comprising:

receiving (106-1 through 106-N) independent Clear Channel Assessment, CCA, decisions from the plurality of R/T points (22) serving the shared cell (20), each CCA decision from each R/T point (22) being indicative of whether a CCA succeeded or failed at the R/T point (22); and

performing (108) scheduling for one or more upcoming Transmit Time Intervals, TTIs, based on the CCA decisions received from the plurality of R/T points (22) serving the shared cell (20),

wherein, for each TTI of the one or more upcoming TTIs, performing (108) the scheduling comprises performing (108) the scheduling based on forecasted probabilities of successful reception by a plurality of wireless devices (32) from the shared cell (20) when only those R/T points (22) of the plurality of R/T points (22) for which the corresponding CCA decisions are indicative of a successful CCA are transmitting,

wherein, for each wireless device (32) of at least one of the plurality of wireless devices (32), the forecasted probability of successful reception by the wireless device (32) from the shared cell (20) is a function of, for each R/T point (22) of the plurality of R/T points (22) for which the corresponding CCA decision is indicative of a successful CCA, an individual forecasted probability of successful reception by the wireless device (32) when the R/T point (22) is transmitting, and

wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of at least one of: a number of previously successful transmissions to the wireless device (32) when the R/T point (22) is transmitting and a number of previously failed transmissions to the wireless device (32) when the R/T point (22) is transmitting.

4. A method of operation of a processing system (26) to schedule downlink transmissions to wireless devices (32) in a shared cell (20) in an unlicensed frequency spectrum, the shared cell (20) being served by a plurality of Reception/Transmission, R/T, points (22), comprising:

receiving (106-1 through 106-N) independent Clear Channel Assessment, CCA, decisions from the plurality of R/T points (22) serving the shared cell (20), each CCA decision from each R/T point (22) being indicative of whether a CCA succeeded or failed at the R/T point (22); and

performing (108) scheduling for one or more upcoming Transmit Time Intervals, TTIs, based on the CCA decisions received from the plurality of R/T points (22) serving the shared cell (20),

wherein, for each TTI of the one or more upcoming TTIs, performing (108) the scheduling comprises performing (108) the scheduling based on forecasted probabilities of successful reception by a plurality of wireless devices (32) from the shared cell (20) when only those R/T points (22) of the plurality of R/T points (22) for which the corresponding CCA decisions are indicative of a successful CCA are transmitting,

wherein, for each wireless device (32) of at least one of the plurality of wireless devices (32), the forecasted probability of successful reception by the wireless device (32) from the shared cell (20) is a function of, for each R/T point (22) of the plurality of R/T points (22) for which the corresponding CCA decision is indicative of a successful CCA, an individual forecasted probability of successful reception by the wireless device (32) when the R/T point (22) is transmitting, and

wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of a location of the wireless device (32) relative to the R/T point (22).

5. A method of operation of a processing system (26) to schedule downlink transmissions to wireless devices (32) in a shared cell (20) in an unlicensed frequency spectrum, the shared cell (20) being served by a plurality of Reception/Transmission, R/T, points (22), comprising:

receiving (106-1 through 106-N) independent Clear Channel Assessment, CCA, decisions from the plurality of R/T points (22) serving the shared cell (20), each CCA decision from each R/T point (22) being indicative of whether a CCA succeeded or failed at the R/T point (22);
performing (108) scheduling for one or more upcoming Transmit Time Intervals, TTIs, based on the CCA decisions received from the plurality of R/T points (22) serving the shared cell (20); and
updating (208) an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;
wherein performing (108) scheduling for the one or more upcoming TTIs based on the CCA decisions received from the plurality of R/T points (22) serving the shared cell (20) comprises:

scheduling (210) one or more wireless devices (32) for downlink transmission in the shared cell (20) for a TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, an individual forecasted probability of successful reception by the wireless device (32) when the R/T point (22) is transmitting;
triggering (212) downlink transmissions to the one or more wireless devices (32) from the shared cell (20) in the TTI;
determining (214) a success or failure of reception of the downlink transmission by each of the one or more wireless devices (32) in the TTI;
for each wireless device (32) of the one or more wireless devices (32) scheduled in the TTI, updating (216) the individual forecasted probability of successful reception by the wireless device (32) for each of the plurality of R/T points (22) having the ON status based on the success or failure of reception of the downlink transmission by the wireless device (32); and
repeating the steps of scheduling (210), triggering (212), determining (214), and updating (216) for one or more additional TTIs.

6. The method of claim 5 further comprising periodically adjusting the individual forecasted probabilities.

7. A method of operation of a processing system (26) to schedule downlink transmissions to wireless devices (32) in a shared cell (20) in an unlicensed frequency spectrum, the shared cell (20) being served by a plurality of Reception/Transmission, R/T, points (22), comprising:

receiving (106-1 through 106-N) independent Clear Channel Assessment, CCA, decisions from the plurality of R/T points (22) serving the shared cell (20), each CCA decision from each R/T point (22) being indicative of whether a CCA succeeded or failed at the R/T point (22);
performing (108) scheduling for one or more upcoming Transmit Time Intervals, TTIs, based on the CCA decisions received from the plurality of R/T points (22) serving the shared cell (20); and
updating (306) an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;
wherein performing (108) scheduling for the one or more upcoming TTIs based on the CCA decisions received from the plurality of R/T points (22) serving the shared cell (20) comprises:

for each wireless device (32) of a plurality of wireless devices (32) potentially scheduled in a TTI, updating (308) an individual forecasted probability of successful reception by the wireless device (32) for each of the plurality of R/T points (22) having the ON status based on a location of the wireless device (32), wherein the individual forecasted probability of successful reception by the wireless device (32) for a R/T point (22) is a forecasted probability of successful reception by the wireless device (32) when the R/T point (22) is transmitting;

scheduling (310) one or more wireless devices (32) of the plurality of wireless devices (32) for downlink transmission in the shared cell (20) for the TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, the individual forecasted probability of successful reception by the wireless device (32) when the R/T point (22) is transmitting;

triggering (312) downlink transmissions to the one or more wireless devices (32) from the shared cell (20) in the TTI; and

repeating the steps of updating (308), scheduling (310), and triggering (312) for one or more additional TTIs.

8. A License Assisted Access, LAA, network (18) comprising:

- a plurality of Reception/Transmission, R/T, points (22) of a shared cell (20) in an unlicensed frequency spectrum, each R/T point (22) being one of the plurality of R/T points (22) serving the shared cell (20), comprising:

-- one or more wireless transmitters (48);
-- one or more wireless receivers (50); and
-- a control system (46) associated with the one or more wireless transmitters (48) and the one or more wireless receivers (50), the control system (46) comprising:

--- at least one processor; and
--- memory containing instructions executable by the at least one processor whereby the R/T point (22) is operative to:

---- perform a Clear Channel Assessment, CCA, the CCA being independent from CCAs performed by other R/T points (22) of the plurality of R/T points (22) serving the shared cell (20); and
---- either transmit a downlink signal for the shared cell (20) or muting transmission from the R/T point (22) (104) according to a CCA decision that results from performing the CCA for the R/T point (22); and

- a processing system (26) operable to schedule downlink transmissions to wireless devices (32) in the shared cell (20) in the unlicensed frequency band, comprising:

-- at least one processor (34); and
-- memory (36) containing instructions executable by the at least one processor (34) whereby the processing system (36) is operable to:

--- receive the independent CCA decisions from the plurality of R/T points (22) serving the shared cell (20), each CCA decision from each R/T point (22) being indicative of whether a CCA succeeded or failed at the R/T point (22); and
--- perform scheduling for one or more upcoming Transmit Time Intervals, TTIs, based on the CCA decisions received from the plurality of R/T points (22) serving the shared cell (20)

9. The LAA network of claim 8 wherein the R/T point (22) further comprises an interface (54) communicatively coupling the R/T point (54) to a processing system (26) for the shared cell (20), and the R/T point (22) is further operative to send the CCA decision to the processing system (26) for the shared cell (20) via the interface (54).

10. A processing system (26) operable to schedule downlink transmissions to wireless devices (32) in a shared cell (20) in an unlicensed frequency band, the shared cell (20) being served by a plurality of Reception/Transmission, R/T, points (22), comprising:

at least one processor (34); and
memory (36) containing instructions executable by the at least one processor (34) whereby the processing system (36) is operable to:

receive independent Clear Channel Assessment, CCA, decisions from the plurality of R/T points (22) serving the shared cell (20), each CCA decision from each R/T point (22) being indicative of whether a CCA succeeded or failed at the R/T point (22); and

perform scheduling for one or more upcoming Transmit Time Intervals, TTIs, based on the CCA decisions received from the plurality of R/T points (22) serving the shared cell (20),

for each TTI of the one or more upcoming TTIs, in the performing operation, the processing system is further operable to:

- perform the scheduling based on forecasted probabilities of successful reception by a plurality of wireless devices (32) from the shared cell (20) when only those R/T points (22) of the plurality of R/T points (22) for which the corresponding CCA decisions are indicative of a successful CCA are transmitting,

wherein, for each wireless device (32) of at least one of the plurality of wireless devices (32), the forecasted probability of successful reception by the wireless device (32) from the shared cell (20) is a function of, for each R/T point (22) of the plurality of R/T points (22) for which the corresponding CCA decision is indicative of a successful CCA, an individual forecasted probability of successful reception by the wireless device (32) when the R/T point (22) is transmitting, and

wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of at least one of: a number of previously successful transmissions to the wireless device (32) when the R/T point (22) is transmitting and a number of previously failed transmissions to the wireless device (32) when the R/T point (22) is transmitting.

11. A processing system (26) operable to schedule downlink transmissions to wireless devices (32) in a shared cell (20) in an unlicensed frequency band, the shared cell (20) being served by a plurality of Reception/Transmission, R/T, points (22), comprising:

at least one processor (34); and

memory (36) containing instructions executable by the at least one processor (34) whereby the processing system (36) is operable to:

receive independent Clear Channel Assessment, CCA, decisions from the plurality of R/T points (22) serving the shared cell (20), each CCA decision from each R/T point (22) being indicative of whether a CCA succeeded or failed at the R/T point (22); and

perform scheduling for one or more upcoming Transmit Time Intervals, TTIs, based on the CCA decisions received from the plurality of R/T points (22) serving the shared cell (20),

for each TTI of the one or more upcoming TTIs, in the performing operation, the processing system is further operable to:

- perform the scheduling based on forecasted probabilities of successful reception by a plurality of wireless devices (32) from the shared cell (20) when only those R/T points (22) of the plurality of R/T points (22) for which the corresponding CCA decisions are indicative of a successful CCA are transmitting,

wherein, for each wireless device (32) of at least one of the plurality of wireless devices (32), the forecasted probability of successful reception by the wireless device (32) from the shared cell (20) is a function of, for each R/T point (22) of the plurality of R/T points (22) for which the corresponding CCA decision is indicative of a successful CCA, an individual forecasted probability of successful reception by the wireless device (32) when the R/T point (22) is transmitting, and

wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of a location of the wireless device (32) relative to the R/T point (22).

12. A processing system (26) operable to schedule downlink transmissions to wireless devices (32) in a shared cell (20) in an unlicensed frequency band, the shared cell (20) being served by a plurality of Reception/Transmission, R/T, points (22), comprising:

at least one processor (34); and

memory (36) containing instructions executable by the at least one processor (34) whereby the processing system (36) is operable to:

receive independent Clear Channel Assessment, CCA, decisions from the plurality of R/T points (22) serving the shared cell (20), each CCA decision from each R/T point (22) being indicative of whether a CCA succeeded or failed at the R/T point (22);

perform scheduling for one or more upcoming Transmit Time Intervals, TTIs, based on the CCA decisions received from the plurality of R/T points (22) serving the shared cell (20); and

update an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;

wherein, in the operation of performing scheduling for the one or more upcoming TTIs based on the CCA decisions received from the plurality of R/T points (22) serving the shared cell (20), the processing system is further operable to:

- schedule one or more wireless devices (32) for downlink transmission in the shared cell (20) for a TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, an individual forecasted probability of successful reception by the wireless device (32) when the R/T point (22) is transmitting;
- trigger downlink transmissions to the one or more wireless devices (32) from the shared cell (20) in the TTI;
- determine a success or failure of reception of the downlink transmission by each of the one or more wireless devices (32) in the TTI;
- for each wireless device (32) of the one or more wireless devices (32) scheduled in the TTI, update the individual forecasted probability of successful reception by the wireless device (32) for each of the plurality of R/T points (22) having the ON status based on the success or failure of reception of the downlink transmission by the wireless device (32); and
- repeat the operations of scheduling, triggering, determining, and updating for one or more additional TTIs.

13. The method of claim 12 wherein the processing system is further operable to periodically adjust the individual forecasted probabilities.

14. A processing system (26) operable to schedule downlink transmissions to wireless devices (32) in a shared cell (20) in an unlicensed frequency band, the shared cell (20) being served by a plurality of Reception/Transmission, R/T, points (22), comprising:

at least one processor (34); and

memory (36) containing instructions executable by the at least one processor (34) whereby the processing system (36) is operable to:

receive independent Clear Channel Assessment, CCA, decisions from the plurality of R/T points (22) serving the shared cell (20), each CCA decision from each R/T point (22) being indicative of whether a CCA succeeded or failed at the R/T point (22);

perform scheduling for one or more upcoming Transmit Time Intervals, TTIs, based on the CCA decisions received from the plurality of R/T points (22) serving the shared cell (20); and

update an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;

wherein, in the operation of performing (108) scheduling for the one or more upcoming TTIs based on the CCA decisions received from the plurality of R/T points (22) serving the shared cell (20), the processing system is further operable to:

- for each wireless device (32) of a plurality of wireless devices (32) potentially scheduled in a TTI, update an individual forecasted probability of successful reception by the wireless device (32) for each of the plurality of R/T points (22) having the ON status based on a location of the wireless device (32), wherein the individual forecasted probability of successful reception by the wireless device (32) for a R/T point (22) is a forecasted probability of successful reception by the wireless device (32) when the R/T point (22) is transmitting;

- schedule one or more wireless devices (32) of the plurality of wireless devices (32) for downlink transmission in the shared cell (20) for the TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, the individual forecasted probability of successful reception by the wireless device (32) when the R/T point (22) is transmitting;

- trigger downlink transmissions to the one or more wireless devices (32) from the shared cell (20) in the TTI; and

- repeat the operations of updating, scheduling, and triggering for one or more additional TTIs.

**15.** A computer program comprising instructions which, when executed on at least one processor, cause the at least one processor to carry out the method according to any of claims 1 to 7.

**16.** A carrier containing the computer program of claim 15 wherein the carrier is one of an electronic signal, an optical signal, a radio signal, or a computer readable storage medium.

**Patentansprüche**

**1.** Verfahren zum Betreiben eines Netzwerks (18) mit lizenzunterstütztem Zugriff, LAA, mit i) einer Vielzahl von Empfangs-/Sende-, R/T-, Punkten (22, 22-1, 22-2, 22-N) einer gemeinsam genutzten Zelle (20) in einem nicht-lizenzierten Frequenzspektrum, wobei jeder R/T-Punkt (22) einer der Vielzahl von R/T-Punkten (22) ist, die die gemeinsam genutzte Zelle (20) bedient, und ii) einem Verarbeitungssystem (26) zum Planen von Downlink-Sendungen an drahtlose Vorrichtungen (32) in der gemeinsam genutzten Zelle (20) in dem nicht-lizenzierten Frequenzspektrum, wobei das Verfahren umfasst:

Durchführen (102, 102-1, 102-2, 102-N) einer Kanal-Frei-Einstufung, CCA, durch jeden R/T-Punkt, wobei die CCA unabhängig von den CCAs ist, die von anderen R/T-Punkten (22) der Vielzahl von R/T-Punkten (22), die die gemeinsam genutzte Zelle (20) bedient, durchgeführt werden;

entweder Senden (104, 104-1, 104-2, 104-N), durch jeden R/T-Punkt, eines Downlink-Signals für die gemeinsam genutzte Zelle (20) oder Stummschalten (104) der Sendung von dem R/T-Punkt (22) gemäß einer CCA-Entscheidung, die sich aus der Durchführung der CCA für den R/T-Punkt (22) ergibt;

Empfangen (106-1, 106-2, 106-N) der unabhängigen CCA-Entscheidungen von der Vielzahl von R/T-Punkten (22), die die gemeinsam genutzte Zelle (20) bedient, durch das Verarbeitungssystem, wobei jede CCA-Entscheidung von jedem R/T-Punkt (22) angibt, ob eine CCA an dem R/T-Punkt (22) erfolgreich oder erfolglos war; und

Durchführen (108) einer Planung (108) durch das Verarbeitungssystem für ein oder mehrere anstehende Sendezeitintervalle, TTIs, auf der Grundlage der CCA-Entscheidungen, die von der Vielzahl von R/T-Punkten (22), die die gemeinsam genutzte Zelle (20) bedient, empfangen werden.

**2.** Verfahren gemäß Anspruch 1, ferner umfassend ein Senden (106, 106-, 160-2, 106-N) der CCA-Entscheidung durch jeden R/T-Punkt an ein Verarbeitungssystem (26) für die gemeinsam genutzte Zelle (20).

**3.** Verfahren zum Betrieb eines Verarbeitungssystems (26) zum Planen von Downlink-Sendungen an drahtlose Vorrichtungen (32) in einer gemeinsam genutzten Zelle (20) in einem nicht-lizenzierten Frequenzspektrum, wobei die gemeinsam genutzte Zelle (20) durch eine Vielzahl von Empfangs-/Sende-, R/T-, Punkten (22) bedient wird, umfassend:

Empfangen (106-1 bis 106-N) unabhängiger Kanal-Frei-Einstufungs-, CCA-, Entscheidungen von der Vielzahl von R/T-Punkten (22), die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war; und

Durchführen (108) der Planung für ein oder mehrere anstehende Sendezeitintervalle, TTIs, auf der Grundlage der CCA-Entscheidungen, die von der Vielzahl von R/T-Punkten (22), die die gemeinsam genutzte Zelle (20) bedient, empfangen werden,

wobei für jedes TTI des einen oder der Vielzahl bevorstehender TTIs das Durchführen (108) der Planung ein Durchführen (108) der Planung basierend auf vorhergesagten Wahrscheinlichkeiten eines erfolgreichen Empfangs durch eine Vielzahl drahtloser Vorrichtungen (32) von der gemeinsam genutzten Zelle (20) umfasst, wenn lediglich diejenigen R/T-Punkte (22) der Vielzahl von R/T-Punkten (22) senden, für die die entsprechenden CCA-Entscheidungen eine erfolgreiche CCA angeben,

wobei für jede drahtlose Vorrichtung (32) von zumindest einer der Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion für jeden R/T-Punkt (22) der Vielzahl von R/T-Punkten (22), für den die entsprechende CCA-Entscheidung eine erfolgreiche CCA angibt, einer individuellen vorhergesagten Wahrscheinlichkeit eines erfolgreichen Empfangs durch die drahtlose Vorrichtung (32) ist, wenn der R/T-Punkt (22) sendet, und

wobei für jeden R/T-Punkt (22) der Vielzahl von R/T-Punkten (22), für den die entsprechende CCA-Entscheidung eine erfolgreiche CCA angibt, die individuelle vorhergesagte Wahrscheinlichkeit eines erfolgreichen Empfangs durch die drahtlose Vorrichtung (32), wenn der R/T-Punkt (22) sendet, eine Funktion von zumindest einer ist aus: einer Anzahl von zuvor erfolgreichen Sendungen an die drahtlose Vorrichtung (32), wenn der R/T-Punkt (22) sendet, und einer Anzahl von zuvor fehlgeschlagenen Sendungen an die drahtlose Vorrichtung (32), wenn der R/T-Punkt (22) sendet.

4. Verfahren zum Betrieb eines Verarbeitungssystems (26) zum Planen von Downlink-Sendungen an drahtlose Vorrichtungen (32) in einer gemeinsam genutzten Zelle (20) in einem nicht-lizenzierten Frequenzspektrum, wobei die gemeinsam genutzte Zelle (20) durch eine Vielzahl von Empfangs-/Sende-, R/T-, Punkten (22) bedient wird, umfassend:

Empfangen (106-1 bis 106-N) unabhängiger Kanal-Frei-Einstufungs-, CCA-Entscheidungen von der Vielzahl von R/T-Punkten (22), die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war; und

Durchführen (108) der Planung für ein oder mehrere anstehende Sendezeitintervalle, TTIs, auf der Grundlage der CCA-Entscheidungen, die von der Vielzahl von R/T-Punkten (22), die die gemeinsam genutzte Zelle (20) bedient, empfangen werden,

wobei für jedes TTI des einen oder der Vielzahl bevorstehender TTIs das Durchführen (108) der Planung ein Durchführen (108) der Planung basierend auf vorhergesagten Wahrscheinlichkeiten eines erfolgreichen Empfangs durch eine Vielzahl drahtloser Vorrichtungen (32) von der gemeinsam genutzten Zelle (20) umfasst, wenn lediglich diejenigen R/T-Punkte (22) der Vielzahl von R/T-Punkten (22) senden, für die die entsprechenden CCA-Entscheidungen eine erfolgreiche CCA angeben,

wobei für jede drahtlose Vorrichtung (32) von zumindest einer der Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion für jeden R/T-Punkt (22) der Vielzahl von R/T-Punkten (22), für den die entsprechende CCA-Entscheidung eine erfolgreiche CCA angibt, einer individuellen vorhergesagten Wahrscheinlichkeit eines erfolgreichen Empfangs durch die drahtlose Vorrichtung (32) ist, wenn der R/T-Punkt (22) sendet, und

wobei für jeden R/T-Punkt (22) der Vielzahl von R/T-Punkten (22), für den die entsprechende CCA-Entscheidung eine erfolgreiche CCA angibt, die individuelle vorhergesagte Wahrscheinlichkeit eines erfolgreichen Empfangs durch die drahtlose Vorrichtung (32), wenn der R/T-Punkt (22) sendet, eine Funktion eines Ortes der drahtlosen Vorrichtung (32) relativ zu dem R/T-Punkt (22) ist.

5. Verfahren zum Betreiben eines Verarbeitungssystems (26) zum Planen von Downlink-Sendungen an drahtlose Vorrichtungen (32) in einer gemeinsam genutzten Zelle (20) in einem nicht-lizenzierten Frequenzspektrum, wobei die gemeinsam genutzte Zelle (20) durch eine Vielzahl von Empfangs-/Sende-, R/T-, Punkten (22) bedient wird, umfassend:

Empfangen (106-1 bis 106-N) unabhängiger Kanal-Frei-Einstufungs-, CCA-, Entscheidungen aus der Vielzahl von R/T-Punkten (22), die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war;

Durchführen (108) einer Planung für ein oder mehrere anstehende Sendezeitintervalle, TTIs, auf der Grundlage der CCA-Entscheidungen, die von der Vielzahl von R/T-Punkten (22), die die gemeinsam genutzte Zelle (20) bedient, empfangen werden; und

Aktualisieren (208) eines EIN/AUS-Status von jedem der Vielzahl von R/T-Punkten (22) auf der Grundlage der CCA-Entscheidungen, so dass ein EIN/AUS-Status eines R/T-Punktes (22) EIN ist, wenn eine entsprechende CCA-Entscheidung einen CCA-Erfolg angibt, und AUS, wenn die entsprechende CCA-Entscheidung einen CCA-Misserfolg angibt;

wobei das Durchführen (108) der Planung für das eine oder die Vielzahl bevorstehender TTIs auf der Grundlage der CCA-Entscheidungen, die von der Vielzahl von R/T-Punkten (22), die die gemeinsam genutzte Zelle (20) bedient, empfangen werden, umfasst:

Planen (210) einer oder mehrerer drahtloser Vorrichtungen (32) für eine Downlink-Sendung in der gemeinsam genutzten Zelle (20) für ein TTI auf der Grundlage vorhergesagter Wahrscheinlichkeiten eines erfolgreichen Empfangs durch die eine oder Vielzahl drahtloser Vorrichtungen (32) von der gemeinsam genutzten Zelle (20) im Hinblick auf die EIN/AUS-Status der Vielzahl von R/T-Punkten (22), wobei für jede drahtlose Vorrichtung (32) der einen oder Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion, für jeden R/T-Punkt (22) der Vielzahl von R/T-Punkten (22) mit dem EIN-Status, einer individuellen vorhergesagten Wahrscheinlichkeit eines erfolgreichen Empfangs durch die drahtlose Vorrichtung (32) ist, wenn der R/T-Punkt (22) sendet;

Auslösen (212) von Downlink-Sendungen an die eine oder mehreren drahtlosen Vorrichtungen (32) von der gemeinsam genutzten Zelle (20) in dem TTI;

Bestimmen (214) eines Erfolgs oder Misserfolgs des Empfangs der Downlink-Sendung durch jede der einen oder Vielzahl drahtloser Vorrichtungen (32) in dem TTI;

für jede drahtlose Vorrichtung (32) der einen oder Vielzahl drahtloser Vorrichtungen (32), die in dem TTI geplant sind, Aktualisieren (216) der individuellen vorhergesagten Wahrscheinlichkeit eines erfolgreichen Empfangs durch die drahtlose Vorrichtung (32) für jeden der Vielzahl von R/T-Punkten (22), die den EIN-Status aufweisen, basierend auf dem Erfolg oder Misserfolg des Empfangs der Downlink-Sendung durch die drahtlose Vorrichtung (32); und

Wiederholen der Schritte des Planens (210), Auslösens (212), Bestimmens (214) und Aktualisierens (216) für ein oder mehrere zusätzliche TTIs.

6. Verfahren gemäß Anspruch 5, ferner umfassend periodisches Einstellen der individuellen vorhergesagten Wahrscheinlichkeiten.

7. Verfahren zum Betrieb eines Verarbeitungssystems (26) zum Planen von Downlink-Sendungen an drahtlose Vorrichtungen (32) in einer gemeinsam genutzten Zelle (20) in einem nicht-lizenzierten Frequenzspektrum, wobei die gemeinsam genutzte Zelle (20) durch eine Vielzahl von Empfangs-/Sende-, R/T-, Punkten (22) bedient wird, umfassend:

Empfangen (106-1 bis 106-N) unabhängiger Kanal-Frei-Einstufungs-, CCA-, Entscheidungen aus der Vielzahl von R/T-Punkten (22), die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war;

Durchführen (108) einer Planung für ein oder mehrere anstehende Sendezeitintervalle, TTIs, auf der Grundlage der CCA-Entscheidungen, die von der Vielzahl von R/T-Punkten (22), die die gemeinsam genutzte Zelle (20) bedient, empfangen werden; und

Aktualisieren (306) eines EIN/AUS-Status von jedem der Vielzahl von R/T-Punkten (22) auf der Grundlage der CCA-Entscheidungen, so dass ein EIN/AUS-Status eines R/T-Punktes (22) EIN ist, wenn eine entsprechende CCA-Entscheidung einen CCA-Erfolg angibt, und AUS, wenn die entsprechende CCA-Entscheidung einen CCA-Misserfolg angibt;

wobei das Durchführen (108) der Planung für das eine oder die Vielzahl bevorstehender TTIs auf der Grundlage der CCA-Entscheidungen, die von der Vielzahl von R/T-Punkten (22), die die gemeinsam genutzte Zelle (20) bedient, empfangen werden, umfasst:

für jede drahtlose Vorrichtung (32) einer Vielzahl drahtloser Vorrichtungen (32), die möglicherweise in einem TTI geplant sind, Aktualisieren (308) einer individuellen vorhergesagten Wahrscheinlichkeit eines erfolgreichen Empfangs durch die drahtlose Vorrichtung (32) für jeden der Vielzahl von R/T-Punkten (22), die den EIN-Status aufweisen, basierend auf einem Ort der drahtlosen Vorrichtung (32), wobei die individuelle vorhergesagte Wahrscheinlichkeit eines erfolgreichen Empfangs durch die drahtlose Vorrichtung (32) für einen R/T-Punkt (22) eine vorhergesagte Wahrscheinlichkeit eines erfolgreichen Empfangs durch die drahtlose Vorrichtung (32) ist, wenn der R/T-Punkt (22) sendet;

Planen (310) einer oder mehrerer drahtloser Vorrichtungen (32) der Vielzahl drahtloser Vorrichtungen (32) für die Downlink-Sendung in der gemeinsam genutzten Zelle (20) für das TTI auf der Grundlage vorhergesagter Wahrscheinlichkeiten eines erfolgreichen Empfangs durch die eine oder Vielzahl drahtloser Vorrichtungen (32) aus der gemeinsam genutzten Zelle (20) im Hinblick auf die EIN/AUS-Status der Vielzahl von R/T-Punkten (22), wobei für jede drahtlose Vorrichtung (32) der einen oder Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion der individuellen vorhergesagten Wahrscheinlichkeit eines erfolgreichen Empfangs durch die drahtlose Vorrichtung (32) für jeden R/T-Punkt (22) der Vielzahl von R/T-Punkten (22) mit dem EIN-Status ist, wenn der R/T-Punkt (22) sendet;

Auslösen (312) von Downlink-Sendungen zu einer oder Vielzahl drahtloser Vorrichtungen (32) von der gemeinsam genutzten Zelle (20) in dem TTI; und

Wiederholen der Schritte des Aktualisierens (308), Planens (310) und Auslösens (312) für ein oder mehrere zusätzliche TTIs.

8. Lizenzunterstütztes Zugriffs-, LAA-, Netzwerk (18), umfassend:

- eine Vielzahl von Empfangs-/Sende-, R/T-, Punkten (22) einer gemeinsam genutzten Zelle (20) in einem nicht-lizenzierten Frequenzspektrum, wobei jeder R/T-Punkt (22) einer der Vielzahl von R/T-Punkten (22) ist, die die gemeinsam genutzte Zelle (20) bedient, umfassend:

-- einen oder mehrere drahtlose Sender (48);
-- einen oder mehrere drahtlose Empfänger (50); und
-- ein Steuersystem (46), das mit dem einen oder der Vielzahl drahtloser Sender (48) und dem einen oder der Vielzahl drahtloser Empfänger (50) assoziiert ist, wobei das Steuersystem (46) umfasst:

--- zumindest einen Prozessor; und
--- einen Speicher, der Anweisungen enthält, die von dem zumindest einen Prozessor ausführbar sind, wobei der R/T-Punkt (22) eingerichtet ist, um:

---- eine Kanal-Frei-Einstufung, CCA, durchzuführen, wobei die CCA unabhängig von den CCAs ist, die von anderen R/T-Punkten (22) der Vielzahl von R/T-Punkten (22), die die gemeinsam genutzte Zelle (20) bedient, durchgeführt werden; und
---- entweder ein Downlink-Signal für die gemeinsam genutzte Zelle (20) zu senden oder die Sendung von dem R/T-Punkt (22) stumm zu schalten (104) gemäß einer CCA-Entscheidung, die sich aus der Durchführung der CCA für den R/T-Punkt (22) ergibt; und

- ein Verarbeitungssystem (26), das betreibbar ist, um Downlink-Sendungen an drahtlose Vorrichtungen (32) in der gemeinsam genutzten Zelle (20) in dem nicht-lizenzierten Frequenzband zu planen, umfassend:

-- zumindest einen Prozessor (34); und
- einen Speicher (36), der Anweisungen enthält, die von dem zumindest einen Prozessor (34) ausführbar sind, wodurch das Verarbeitungssystem (36) eingerichtet ist, um:

--- die unabhängigen CCA-Entscheidungen von der Vielzahl von R/T-Punkten (22), die die gemeinsam genutzte Zelle (20) bedient, zu empfangen, wobei jede CCA-Entscheidung von jedem R/T-Punkt (22) angibt, ob eine CCA an dem R/T-Punkt (22) erfolgreich oder erfolglos war; und
--- die Planung für ein oder mehrere anstehende Sendezeitintervalle, TTIs, auf der Grundlage der CCA-Entscheidungen durchzuführen, die von der Vielzahl von R/T-Punkten (22), die die gemeinsam genutzte Zelle (20) bedient, empfangen werden.

9. LAA-Netzwerk gemäß Anspruch 8, wobei der R/T-Punkt (22) ferner eine Schnittstelle (54) umfasst, die den R/T-Punkt (54) kommunikationsfähig mit einem Verarbeitungssystem (26) für die gemeinsam genutzte Zelle (20) koppelt, und der R/T-Punkt (22) ferner eingerichtet ist, um die CCA-Entscheidung über die Schnittstelle (54) an das Verarbeitungssystem (26) für die gemeinsam genutzte Zelle (20) zu senden.

10. Verarbeitungssystem (26), das betreibbar ist, um Downlink-Sendungen an drahtlose Vorrichtungen (32) in einer gemeinsam genutzten Zelle (20) in einem nicht-lizenzierten Frequenzband zu planen, wobei die gemeinsam genutzte Zelle (20) durch eine Vielzahl von Empfangs-/Sendungs-, R/T-, Punkten (22) bedient wird, umfassend:

zumindest einen Prozessor (34); und
einen Speicher (36), der Anweisungen enthält, die von dem zumindest einen Prozessor (34) ausführbar sind, wodurch das Verarbeitungssystem (36) eingerichtet ist, um:

unabhängige Kanal-Frei-Einstufungs-, CCA-, Entscheidungen von der Vielzahl von R/T-Punkten (22) zu empfangen, die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war; und
die Planung für ein oder mehrere anstehende Sendezeitintervalle, TTIs, auf der Grundlage der CCA-Entscheidungen durchzuführen, die von der Vielzahl von R/T-Punkten (22), die die gemeinsam genutzte Zelle (20) bedient, empfangen werden,
wobei für jedes TTI eines oder mehrerer anstehender TTIs in dem ausführenden Vorgang das Verarbeitungssystem weiterhin eingerichtet ist, um:

- die Planung auf der Grundlage vorhergesagter Wahrscheinlichkeiten eines erfolgreichen Empfangs durch eine Vielzahl drahtloser Vorrichtungen (32) von der gemeinsam genutzten Zelle (20) durchzuführen, wenn lediglich diejenigen R/T-Punkte (22) der Vielzahl von R/T-Punkten (22) senden, für die die entsprechenden CCA-Entscheidungen eine erfolgreiche CCA angeben,

wobei für jede drahtlose Vorrichtung (32) von zumindest einer der Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion für jeden R/T-Punkt (22) der Vielzahl von R/T-Punkten (22), für den die entsprechende CCA-Entscheidung eine erfolgreiche CCA angibt, einer individuellen vorhergesagten Wahrscheinlichkeit eines erfolgreichen Empfangs durch die drahtlose Vorrichtung (32) ist, wenn der R/T-Punkt (22) sendet, und wobei für jeden R/T-Punkt (22) der Vielzahl von R/T-Punkten (22), für den die entsprechende CCA-Entscheidung eine erfolgreiche CCA angibt, die individuelle vorhergesagte Wahrscheinlichkeit eines erfolgreichen Empfangs durch die drahtlose Vorrichtung (32), wenn der R/T-Punkt (22) sendet, eine Funktion von zumindest einer ist aus: einer Anzahl von zuvor erfolgreichen Sendungen an die drahtlose Vorrichtung (32), wenn der R/T-Punkt (22) sendet, und einer Anzahl von zuvor fehlgeschlagenen Sendungen an die drahtlose Vorrichtung (32), wenn der R/T-Punkt (22) sendet.

11. Verarbeitungssystem (26), das betreibbar ist, um Downlink-Sendungen an drahtlose Vorrichtungen (32) in einer gemeinsam genutzten Zelle (20) in einem nicht-lizenzierten Frequenzband zu planen, wobei die gemeinsam genutzte Zelle (20) durch eine Vielzahl von Empfangs-/Sendungs-, R/T-, Punkten (22) bedient wird, umfassend:

zumindest einen Prozessor (34); und
einen Speicher (36), der Anweisungen enthält, die von dem zumindest einen Prozessor (34) ausführbar sind, wodurch das Verarbeitungssystem (36) eingerichtet ist, um:

unabhängige Kanal-Frei-Einstufungs-, CCA-, Entscheidungen von der Vielzahl von R/T-Punkten (22) zu empfangen, die die gemeinsam genutzte Zelle (20) bedient, wobei jede CCA-Entscheidung von jedem R/T-Punkt (22) angibt, ob eine CCA an dem R/T-Punkt (22) erfolgreich oder erfolglos war; und
die Planung für ein oder mehrere anstehende Sendezeitintervalle, TTIs, auf der Grundlage der CCA-Entscheidungen durchzuführen, die von der Vielzahl von R/T-Punkten (22), die die gemeinsam genutzte Zelle (20) bedient, empfangen werden,
wobei für jedes TTI eines oder mehrerer anstehender TTIs in dem ausführenden Vorgang das Verarbeitungssystem ferner eingerichtet ist, um:

- die Planung auf der Grundlage vorhergesagter Wahrscheinlichkeiten eines erfolgreichen Empfangs durch eine Vielzahl drahtloser Vorrichtungen (32) von der gemeinsam genutzten Zelle (20) durchzuführen, wenn lediglich diejenigen R/T-Punkte (22) der Vielzahl von R/T-Punkten (22) senden, für die die entsprechenden CCA-Entscheidungen eine erfolgreiche CCA angeben,

wobei für jede drahtlose Vorrichtung (32) von zumindest einer der Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion für jeden R/T-Punkt (22) der Vielzahl von R/T-Punkten (22), für den die entsprechende CCA-Entscheidung eine erfolgreiche CCA angibt, einer individuellen vorhergesagten Wahrscheinlichkeit eines erfolgreichen Empfangs durch die drahtlose Vorrichtung (32) ist, wenn der R/T-Punkt (22) sendet, und wobei für jeden R/T-Punkt (22) der Vielzahl von R/T-Punkten (22), für den die entsprechende CCA-Entscheidung eine erfolgreiche CCA angibt, die individuelle vorhergesagte Wahrscheinlichkeit eines erfolgreichen Empfangs durch die drahtlose Vorrichtung (32), wenn der R/T-Punkt (22) sendet, eine Funktion eines Ortes der drahtlosen Vorrichtung (32) relativ zu dem R/T-Punkt (22) ist.

**12.** Verarbeitungssystem (26), das betreibbar ist, um Downlink-Sendungen an drahtlose Vorrichtungen (32) in einer gemeinsam genutzten Zelle (20) in einem nicht-lizenzierten Frequenzband zu planen, wobei die gemeinsam genutzte Zelle (20) durch eine Vielzahl von Empfangs-/Sendungs-, R/T-, Punkten (22) bedient wird, umfassend:

zumindest einen Prozessor (34); und
einen Speicher (36), der Anweisungen enthält, die von dem zumindest einen Prozessor (34) ausführbar sind, wodurch das Verarbeitungssystem (36) eingerichtet ist, um:

unabhängige Kanal-Frei-Einstufungs-, CCA-, Entscheidungen von der Vielzahl von R/T-Punkten (22), die die gemeinsam genutzte Zelle (20) bedient, zu empfangen, wobei jede CCA-Entscheidung von jedem R/T-Punkt (22) angibt, ob eine CCA an dem R/T-Punkt (22) erfolgreich oder erfolglos war;
die Planung für ein oder mehrere anstehende Sendezeitintervalle, TTIs, auf der Grundlage der CCA-Entscheidungen durchzuführen, die von der Vielzahl von R/T-Punkten (22), die die gemeinsam genutzte Zelle (20) bedient, empfangen werden; und
einen EIN/AUS-Status von jedem der Vielzahl von R/T-Punkten (22) auf der Grundlage der CCA-Entscheidungen zu aktualisieren, so dass ein EIN/AUS-Status eines R/T-Punktes (22) EIN ist, wenn eine entsprechende CCA-Entscheidung einen CCA-Erfolg angibt, und AUS, wenn die entsprechende CCA-Entscheidung einen CCA-Misserfolg angibt;

wobei das Verarbeitungssystem bei der Durchführung der Planung für das eine oder die Vielzahl bevorstehender TTIs auf der Grundlage der CCA-Entscheidungen, die von den Vielzahl von R/T-Punkten (22), die die gemeinsam genutzte Zelle (20) bedient, empfangen werden, weiterhin eingerichtet ist, um:

- eine oder mehrere drahtlose Vorrichtungen (32) zur Downlink-Sendung in der gemeinsam genutzten Zelle (20) für ein TTI auf der Grundlage vorhergesagter Wahrscheinlichkeiten eines erfolgreichen Empfangs durch die eine oder Vielzahl drahtloser Vorrichtungen (32) aus der gemeinsam genutzten Zelle (20) im Hinblick auf die EIN/AUS-Status der Vielzahl von R/T-Punkten (22) zu planen, wobei für jede drahtlose Vorrichtung (32) der einen oder Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion für jeden R/T-Punkt (22) der Vielzahl von R/T-Punkten (22) mit dem EIN-Status, einer individuellen vorhergesagten Wahrscheinlichkeit eines erfolgreichen Empfangs durch die drahtlose Vorrichtung (32) ist, wenn der R/T-Punkt (22) sendet;
- Downlink-Sendungen an eine oder mehrere drahtlose Vorrichtungen (32) von der gemeinsam genutzten Zelle (20) in dem TTI auszulösen;
- einen Erfolg oder Misserfolg des Empfangs der Downlink-Sendung durch jede der einen oder Vielzahl drahtloser Vorrichtungen (32) in dem TTI zu bestimmen;
- für jede drahtlose Vorrichtung (32) der einen oder Vielzahl drahtloser Vorrichtungen (32), die in dem TTI geplant sind, die individuelle vorhergesagte Wahrscheinlichkeit eines erfolgreichen Empfangs durch die drahtlose Vorrichtung (32) für jeden der Vielzahl von R/T-Punkten (22), die den EIN-Status aufweisen, auf der Grundlage des Erfolgs oder Misserfolgs des Empfangs der Downlink-Sendung durch die drahtlose Vorrichtung (32) zu aktualisieren; und
- die Vorgänge des Planens, Auslösens, Bestimmens und Aktualisierens für ein oder mehrere zusätzliche TTIs zu wiederholen.

**13.** Verfahren nach Anspruch 12, bei dem das Verarbeitungssystem weiterhin eingerichtet ist, um die individuellen vorhergesagten Wahrscheinlichkeiten periodisch einzustellen.

**14.** Verarbeitungssystem (26), das betreibbar ist, um Downlink-Sendungen an drahtlose Vorrichtungen (32) in einer gemeinsam genutzten Zelle (20) in einem nicht-lizenzierten Frequenzband zu planen, wobei die gemeinsam genutzte Zelle (20) durch eine Vielzahl von Empfangs-/Sendungs-, R/T-, Punkten (22) bedient wird, umfassend:

zumindest einen Prozessor (34); und
einen Speicher (36), der Anweisungen enthält, die von dem zumindest einen Prozessor (34) ausführbar sind, wodurch das Verarbeitungssystem (36) eingerichtet ist, um:

unabhängige Kanal-Frei-Einstufungs-, CCA-, Entscheidungen von der Vielzahl von R/T-Punkten (22), die die gemeinsam genutzte Zelle (20) bedient, zu erhalten, wobei jede CCA-Entscheidung von jedem R/T-Punkt (22) angibt, ob eine CCA an dem R/T-Punkt (22) erfolgreich oder erfolglos war;

die Planung für ein oder mehrere anstehende Sendezeitintervalle, TTIs, auf der Grundlage der CCA-Entscheidungen durchzuführen, die von der Vielzahl von R/T-Punkten (22), die die gemeinsam genutzte Zelle (20) bedient, empfangen werden; und

einen EIN/AUS-Status von jedem der Vielzahl von R/T-Punkten (22) auf der Grundlage der CCA-Entscheidungen zu aktualisieren, so dass ein EIN/AUS-Status eines R/T-Punktes (22) EIN ist, wenn eine entsprechende CCA-Entscheidung einen CCA-Erfolg angibt, und AUS, wenn die entsprechende CCA-Entscheidung einen CCA-Misserfolg angibt;

wobei das Verarbeitungssystem bei dem Vorgang des Durchführens (108) einer Planung für das eine oder die Vielzahl bevorstehender TTIs auf der Grundlage der CCA-Entscheidungen, die von der Vielzahl von R/T-Punkten (22), die die gemeinsam genutzte Zelle (20) bedient, empfangen werden, weiterhin eingerichtet ist, um:

- für jede drahtlose Vorrichtung (32) einer Vielzahl drahtloser Vorrichtungen (32), die möglicherweise in einem TTI geplant sind, eine individuelle vorhergesagte Wahrscheinlichkeit eines erfolgreichen Empfangs durch die drahtlose Vorrichtung (32) für jeden der Vielzahl von R/T-Punkten (22), die den EIN-Status aufweisen, basierend auf einem Ort der drahtlosen Vorrichtung (32) zu aktualisieren, wobei die individuelle vorhergesagte Wahrscheinlichkeit eines erfolgreichen Empfangs durch die drahtlose Vorrichtung (32) für einen R/T-Punkt (22) eine vorhergesagte Wahrscheinlichkeit eines erfolgreichen Empfangs durch die drahtlose Vorrichtung (32) ist, wenn der R/T-Punkt (22) sendet;

- eine oder mehrere drahtlose Vorrichtungen (32) aus der Vielzahl drahtloser Vorrichtungen (32) zur Downlink-Sendung in der gemeinsam genutzten Zelle (20) für das TTI auf der Grundlage vorhergesagter Wahrscheinlichkeiten eines erfolgreichen Empfangs durch die eine oder Vielzahl drahtloser Vorrichtungen (32) aus der gemeinsam genutzten Zelle (20) im Hinblick auf die EIN/AUS-Status der Vielzahl von R/T-Punkten (22) zu planen, wobei für jede drahtlose Vorrichtung (32) der einen oder Vielzahl drahtloser Vorrichtungen (32) die vorhergesagte Wahrscheinlichkeit eines erfolgreichen Empfangs durch die drahtlose Vorrichtung (32) von der gemeinsam genutzten Zelle (20) eine Funktion der individuellen vorhergesagten Wahrscheinlichkeit eines erfolgreichen Empfangs durch die drahtlose Vorrichtung (32) für jeden R/T-Punkt (22) der Vielzahl von R/T-Punkten (22) mit dem EIN-Status ist, wenn der R/T-Punkt (22) sendet;

- Downlink-Sendungen an eine oder mehrere drahtlose Vorrichtungen (32) von der gemeinsam genutzten Zelle (20) in dem TTI auszulösen; und

- die Vorgänge des Aktualisierens, Planens und Auslösens für eine oder mehrere zusätzliche TTIs zu wiederholen.

15. Computerprogramm, das Anweisungen umfasst, die bei Ausführung auf zumindest einem Prozessor den zumindest einen Prozessor veranlassen, das Verfahren gemäß einem der Ansprüche 1 bis 7 auszuführen.

16. Träger, der das Computerprogramm nach Anspruch 15 umfasst, wobei der Träger ein elektronisches Signal, ein optisches Signal, ein Funksignal oder ein computerlesbares Speichermedium ist.

**Revendications**

1. Procédé de fonctionnement d'un réseau (18) à accès assisté par licence, LAA, comprenant i) une pluralité de points de réception/transmission, R/T (22, 22-1, 22-2, 22-N) d'une cellule partagée (20) dans un spectre de fréquences sans licence, chaque point de R/T (22) étant un parmi la pluralité de points de R/T (22) desservant la cellule partagée (20), et ii) un système de traitement (26) pour programmer des transmissions en liaison descendante jusqu'à des dispositifs sans fil (32) dans la cellule partagée (20) dans le spectre de fréquences sans licence, le procédé comprenant :

l'exécution (102, 102-1, 102-2, 102-N), par chaque point de R/T, d'une évaluation de canal libre, CCA, la CCA étant indépendante de CCA exécutées par d'autres points de R/T (22) parmi les points de R/T (22) multiples desservant la cellule partagée (20) ;

soit la transmission (104, 104-1, 104-2, 104-N), par chaque point de R/T, d'un signal en liaison descendante pour la cellule partagée (20), soit le blocage d'une transmission provenant du point de R/T (22) (104) conformément à une décision de CCA qui résulte de l'exécution de la CCA pour le point de R/T (22) ;

la réception (106-1, 106-2, 106-N), par le système de traitement, des décisions de CCA indépendantes de la pluralité de points de R/T (22) desservant la cellule partagée (20), chaque décision de CCA provenant de chaque point de R/T (22) étant indicatrice de si une CCA a réussi ou échoué au point de R/T (22) ; et

l'exécution (108), par le système de traitement, d'une programmation pour un ou plusieurs intervalles de temps de transmission, TTI, à venir, sur la base des décisions de CCA reçues de la pluralité de points de R/T (22) desservant la cellule partagée (20).

2. Procédé selon la revendication 1, comprenant en outre l'envoi (106, 106-1, 106-2, 106-N), par chaque point de R/T, de la décision de CCA à un système de traitement (26) pour la cellule partagée (20).

3. Procédé de fonctionnement d'un système de traitement (26) pour programmer des transmissions en liaison descendante jusqu'à des dispositifs sans fil (32) dans une cellule partagée (20) dans un spectre de fréquences sans licence, la cellule partagée (20) étant desservie par une pluralité de points de réception/transmission, R/T (22), comprenant :

la réception (106-1 à 106-N) de décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ; et

l'exécution (108) d'une programmation pour un ou plusieurs intervalles de temps de transmission, TTI, à venir, sur la base des décisions de CCA reçues de la pluralité de points de R/T (22) desservant la cellule partagée (20), dans lequel, pour chaque TTI parmi les un ou plusieurs TTI à venir, l'exécution (108) de la programmation comprend l'exécution (108) de la programmation sur la base de probabilités prévisionnelles de réception réussie par une pluralité de dispositifs sans fil (32) depuis la cellule partagée (20) lorsque seuls les points de R/T (22) parmi la pluralité de points de R/T (22) pour lesquels les décisions de CCA correspondantes sont indicatrices d'une CCA réussie transmettent,

dans lequel, pour chaque dispositif sans fil (32) parmi au moins un de la pluralité de dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) pour lequel la décision de CCA correspondante est indicatrice d'une CCA réussie, d'une probabilité prévisionnelle individuelle de réception réussie par le dispositif sans fil (32) lorsque le point de R/T (22) transmet, et

dans lequel, pour chaque point de R/T (22) parmi la pluralité de points de R/T (22) pour lequel la décision de CCA correspondante est indicatrice d'une CCA réussie, la probabilité prévisionnelle individuelle de réception réussie par le dispositif sans fil (32) lorsque le point de R/T (22) transmet est une fonction d'au moins un parmi : un nombre de transmissions précédemment réussies jusqu'au dispositif sans fil (32) lorsque le point de R/T (22) transmet et un nombre de transmissions précédemment échouées jusqu'au dispositif sans fil (32) lorsque le point de R/T (22) transmet.

4. Procédé de fonctionnement d'un système de traitement (26) pour programmer des transmissions en liaison descendante jusqu'à des dispositifs sans fil (32) dans une cellule partagée (20) dans un spectre de fréquences sans licence, la cellule partagée (20) étant desservie par une pluralité de points de réception/transmission, R/T (22), comprenant :

la réception (106-1 à 106-N) de décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ; et

l'exécution (108) d'une programmation pour un ou plusieurs intervalles de temps de transmission, TTI, à venir, sur la base des décisions de CCA reçues de la pluralité de points de R/T (22) desservant la cellule partagée (20), dans lequel, pour chaque TTI parmi les un ou plusieurs TTI à venir, l'exécution (108) de la programmation comprend l'exécution (108) de la programmation sur la base de probabilités prévisionnelles de réception réussie par une pluralité de dispositifs sans fil (32) depuis la cellule partagée (20) lorsque seuls les points de R/T (22) parmi la pluralité de points de R/T (22) pour lesquels les décisions de CCA correspondantes sont indicatrices d'une CCA réussie transmettent,

dans lequel, pour chaque dispositif sans fil (32) parmi au moins un de la pluralité de dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) pour lequel la décision de CCA correspondante est indicatrice d'une CCA réussie, d'une probabilité prévisionnelle individuelle de réception réussie par le dispositif sans fil (32) lorsque le point de R/T (22) transmet, et

dans lequel, pour chaque point de R/T (22) parmi la pluralité de points de R/T (22) pour lequel la décision de CCA correspondante est indicatrice d'une CCA réussie, la probabilité prévisionnelle individuelle de réception réussie par le dispositif sans fil (32) lorsque le point de R/T (22) transmet est une fonction d'une localisation du dispositif sans fil (32) par rapport au point de R/T (22).

**5.** Procédé de fonctionnement d'un système de traitement (26) pour programmer des transmissions en liaison descendante jusqu'à des dispositifs sans fil (32) dans une cellule partagée (20) dans un spectre de fréquences sans licence, la cellule partagée (20) étant desservie par une pluralité de points de réception/transmission, R/T (22), comprenant :

la réception (106-1 à 106-N) de décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ;
l'exécution (108) d'une programmation pour un ou plusieurs intervalles de temps de transmission, TTI, à venir, sur la base des décisions de CCA reçues de la pluralité de points de R/T (22) desservant la cellule partagée (20) ; et
la mise à jour (208) d'un statut ACTIVÉ/DÉSACTIVÉ de chacun de la pluralité de points de R/T (22) sur la base des décisions de CCA de telle manière qu'un statut ACTIVÉ/DÉSACTIVÉ d'un point de R/T (22) est ACTIVÉ si une décision de CCA respective est indicatrice d'un succès de CCA et DÉSACTIVÉ si la décision de CCA respective est indicatrice d'un échec de CCA ;
dans lequel l'exécution (108) de la programmation pour les un ou plusieurs TTI à venir sur la base des décisions de CCA reçues de la pluralité de points de R/T (22) desservant la cellule partagée (20) comprend :

la programmation (210) d'un ou plusieurs dispositifs sans fil (32) pour une transmission en liaison descendante dans la cellule partagée (20) pour un TTI sur la base de probabilités prévisionnelles de réception réussie par les un ou plusieurs dispositifs sans fil (32) depuis la cellule partagée (20) au vu des statuts ACTIVÉ/DÉSACTIVÉ de la pluralité de points de R/T (22), dans lequel, pour chaque dispositif sans fil (32) parmi les un ou plusieurs dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) ayant le statut ACTIVÉ, d'une probabilité prévisionnelle individuelle de réception réussie par le dispositif sans fil (32) lorsque le point de R/T (22) transmet ;
le déclenchement (212) de transmissions en liaison descendante jusqu'aux un ou plusieurs dispositifs sans fil (32) depuis la cellule partagée (20) dans le TTI ;
la détermination (214) d'un succès ou d'un échec de réception de la transmission en liaison descendante par chacun parmi les un ou plusieurs dispositifs sans fil (32) dans le TTI ;
pour chaque dispositif sans fil (32) parmi les un ou plusieurs dispositifs sans fil (32) programmés dans le TTI, la mise à jour (216) de la probabilité prévisionnelle individuelle de réception réussie par le dispositif sans fil (32) pour chacun parmi la pluralité de points de R/T (22) ayant le statut ACTIVÉ sur la base du succès ou de l'échec de réception de la transmission en liaison descendante par le dispositif sans fil (32) ; et
la répétition des étapes de programmation (210), de déclenchement (212), de détermination (214), et de mise à jour (216) pour un ou plusieurs TTI additionnels.

**6.** Procédé selon la revendication 5, comprenant en outre l'ajustement périodique des probabilités prévisionnelles individuelles.

**7.** Procédé de fonctionnement d'un système de traitement (26) pour programmer des transmissions en liaison descendante jusqu'à des dispositifs sans fil (32) dans une cellule partagée (20) dans un spectre de fréquences sans licence, la cellule partagée (20) étant desservie par une pluralité de points de réception/transmission, R/T (22), comprenant :

la réception (106-1 à 106-N) de décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ;
l'exécution (108) d'une programmation pour un ou plusieurs intervalles de temps de transmission, TTI, à venir, sur la base des décisions de CCA reçues de la pluralité de points de R/T (22) desservant la cellule partagée (20) ; et
la mise à jour (306) d'un statut ACTIVÉ/DÉSACTIVÉ de chacun de la pluralité de points de R/T (22) sur la base des décisions de CCA de telle manière qu'un statut ACTIVÉ/DÉSACTIVÉ d'un point de R/T (22) est ACTIVÉ si une décision de CCA respective est indicatrice d'un succès de CCA et DÉSACTIVÉ si la décision de CCA respective est indicatrice d'un échec de CCA ;

dans lequel l'exécution (108) de la programmation pour les un ou plusieurs TTI à venir sur la base des décisions de CCA reçues de la pluralité de points de R/T (22) desservant la cellule partagée (20) comprend :

pour chaque dispositif sans fil (32) parmi la pluralité de dispositifs sans fil (32) potentiellement programmé dans un TTI, la mise à jour (308) d'une probabilité prévisionnelle individuelle de réception réussie par le dispositif sans fil (32) pour chacun de la pluralité de points de R/T (22) ayant le statut ACTIVÉ sur la base d'une localisation du dispositif sans fil (32), dans lequel la probabilité prévisionnelle individuelle de réception réussie par le dispositif sans fil (32) pour un point de R/T (22) est une probabilité prévisionnelle de réception réussie par le dispositif sans fil (32) lorsque le point de R/T (22) transmet ;

la programmation (310) d'un ou plusieurs dispositifs sans fil (32) parmi la pluralité de dispositifs sans fil (32) pour une transmission en liaison descendante dans la cellule partagée (20) pour le TTI sur la base de probabilités prévisionnelles de réception réussie par les un ou plusieurs dispositifs sans fil (32) depuis la cellule partagée (20) au vu des statuts ACTIVÉ/DÉSACTIVÉ de la pluralité de points de R/T (22), dans lequel, pour chaque dispositif sans fil (32) parmi les un ou plusieurs dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) ayant le statut ACTIVÉ, de la probabilité prévisionnelle individuelle de réception réussie par le dispositif sans fil (32) lorsque le point de R/T (22) transmet ;

le déclenchement (312) de transmissions en liaison descendante jusqu'aux un ou plusieurs dispositifs sans fil (32) depuis la cellule partagée (20) dans le TTI ; et

la répétition des étapes de mise à jour (308), de programmation (310), et de déclenchement (312) pour un ou plusieurs TTI additionnels.

8.  Réseau (18) à accès assisté par licence, LAA, comprenant :

- une pluralité de points de réception/transmission R/T (22) d'une cellule partagée (20) dans un spectre de fréquences sans licence, chaque point de R/T (22) étant un parmi la pluralité de points de R/T (22) desservant la cellule partagée (20), comprenant :

-- un ou plusieurs émetteurs sans fil (48) ;
-- un ou plusieurs récepteurs sans fil (50) ; et
-- un système de commande (46) associé avec les un ou plusieurs émetteurs sans fil (48) et les un ou plusieurs récepteurs sans fil (50), le système de commande (46) comprenant :

--- au moins un processeur ; et
--- une mémoire contenant des instructions exécutables par l'au moins un processeur d'où il résulte que le point de R/T (22) est opérationnel pour :

---- exécuter une évaluation de canal libre, CCA, la CCA étant indépendante de CCA exécutées par d'autres points de R/T (22) parmi la pluralité de points de R/T (22) desservant la cellule partagée (20) ; et
---- soit transmettre un signal en liaison descendante pour la cellule partagée (20), soit bloquer une transmission provenant du point de R/T (22) (104) conformément à une décision de CCA qui résulte de l'exécution de la CCA pour le point de R/T (22) ; et

- un système de traitement (26) opérationnel pour programmer des transmissions en liaison descendante jusqu'à des dispositifs sans fil (32) dans la cellule partagée (20) dans la bande de fréquences sans licence, comprenant :

-- au moins un processeur (34) ; et
-- une mémoire (36) contenant des instructions exécutables par l'au moins un processeur (34) d'où il résulte que le système de traitement (26) est opérationnel pour :

--- recevoir les décisions de CCA indépendantes de la pluralité de points de R/T (22) desservant la cellule partagée (20), chaque décision de CCA provenant de chaque point de R/T (22) étant indicatrice de si une CCA a réussi ou échoué au point de R/T (22) ; et
--- exécuter une programmation pour un ou plusieurs intervalles de temps de transmission, TTI, à venir, sur la base des décisions de CCA reçues de la pluralité de points de R/T (22) desservant la cellule partagée (20).

9. Réseau LAA selon la revendication 8, dans lequel le point de R/T (22) comprend en outre une interface (54) couplant en communication le point de R/T (22) à un système de traitement (26) pour la cellule partagée (20), et le point de R/T (22) est en outre opérationnel pour envoyer la décision de CCA au système de traitement (26) pour la cellule partagée (20) par l'intermédiaire de l'interface (54).

10. Système de traitement (26) opérationnel pour programmer des transmissions en liaison descendante jusqu'à des dispositifs sans fil (32) dans une cellule partagée (20) dans une bande de fréquences sans licence, la cellule partagée (20) étant desservie par une pluralité de points de réception/transmission, R/T (22), comprenant :

au moins un processeur (34) ; et
une mémoire (36) contenant des instructions exécutables par l'au moins un processeur (34) d'où il résulte que le système de traitement (26) est opérationnel pour :

recevoir des décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ; et
exécuter une programmation pour un ou plusieurs intervalles de temps de transmission, TTI, à venir, sur la base des décisions de CCA reçues de la pluralité de points de R/T (22) desservant la cellule partagée (20), pour chaque TTI parmi les un ou plusieurs TTI à venir, dans l'opération d'exécution, le système de traitement est en outre opérationnel pour :

- exécuter la programmation sur la base de probabilités prévisionnelles de réception réussie par une pluralité de dispositifs sans fil (32) depuis la cellule partagée (20) lorsque seuls les points de R/T (22) parmi la pluralité de points de R/T (22) pour lesquels les décisions de CCA correspondantes sont indicatrices d'une CCA réussie transmettent,

dans lequel, pour chaque dispositif sans fil (32) parmi au moins un de la pluralité de dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) pour lequel la décision de CCA correspondante est indicatrice d'une CCA réussie, d'une probabilité prévisionnelle individuelle de réception réussie par le dispositif sans fil (32) lorsque le point de R/T (22) transmet, et
dans lequel, pour chaque point de R/T (22) parmi la pluralité de points de R/T (22) pour lequel la décision de CCA correspondante est indicatrice d'une CCA réussie, la probabilité prévisionnelle individuelle de réception réussie par le dispositif sans fil (32) lorsque le point de R/T (22) transmet est une fonction d'au moins un parmi : un nombre de transmissions précédemment réussies jusqu'au dispositif sans fil (32) lorsque le point de R/T (22) transmet et un nombre de transmissions précédemment échouées jusqu'au dispositif sans fil (32) lorsque le point de R/T (22) transmet.

11. Système de traitement (26) opérationnel pour programmer des transmissions en liaison descendante jusqu'à des dispositifs sans fil (32) dans une cellule partagée (20) dans une bande de fréquences sans licence, la cellule partagée (20) étant desservie par une pluralité de points de réception/transmission, R/T (22), comprenant :

au moins un processeur (34) ; et
une mémoire (36) contenant des instructions exécutables par l'au moins un processeur (34) d'où il résulte que le système de traitement (26) est opérationnel pour :

recevoir des décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ; et
exécuter une programmation pour un ou plusieurs intervalles de temps de transmission, TTI, à venir, sur la base des décisions de CCA reçues de la pluralité de points de R/T (22) desservant la cellule partagée (20), pour chaque TTI parmi les un ou plusieurs TTI à venir, dans l'opération d'exécution, le système de traitement est en outre opérationnel pour :

- exécuter la programmation sur la base de probabilités prévisionnelles de réception réussie par une pluralité de dispositifs sans fil (32) depuis la cellule partagée (20) lorsque seuls les points de R/T (22) parmi la pluralité de points de R/T (22) pour lesquels les décisions de CCA correspondantes sont indicatrices d'une CCA réussie transmettent,

dans lequel, pour chaque dispositif sans fil (32) parmi au moins un de la pluralité de dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) pour lequel la décision de CCA correspondante est indicatrice d'une CCA réussie, d'une probabilité prévisionnelle individuelle de réception réussie par le dispositif sans fil (32) lorsque le point de R/T (22) transmet, et

dans lequel, pour chaque point de R/T (22) parmi la pluralité de points de R/T (22) pour lequel la décision de CCA correspondante est indicatrice d'une CCA réussie, la probabilité prévisionnelle individuelle de réception réussie par le dispositif sans fil (32) lorsque le point de R/T (22) transmet est une fonction d'une localisation du dispositif sans fil (32) par rapport au point de R/T (22).

12. Système de traitement (26) opérationnel pour programmer des transmissions en liaison descendante jusqu'à des dispositifs sans fil (32) dans une cellule partagée (20) dans une bande de fréquences sans licence, la cellule partagée (20) étant desservie par une pluralité de points de réception/transmission, R/T (22), comprenant :

au moins un processeur (34) ; et
une mémoire (36) contenant des instructions exécutables par l'au moins un processeur (34) d'où il résulte que le système de traitement (26) est opérationnel pour :

recevoir des décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ;
exécuter une programmation pour un ou plusieurs intervalles de temps de transmission, TTI, à venir, sur la base des décisions de CCA reçues de la pluralité de points de R/T (22) desservant la cellule partagée (20) ; et
mettre à jour un statut ACTIVÉ/DÉSACTIVÉ de chacun de la pluralité de points de R/T (22) sur la base des décisions de CCA de telle manière qu'un statut ACTIVÉ/DÉSACTIVÉ d'un point de R/T (22) est ACTIVÉ si une décision de CCA respective est indicatrice d'un succès de CCA et DÉSACTIVÉ si la décision de CCA respective est indicatrice d'un échec de CCA ;

dans lequel, dans l'opération d'exécution de la programmation pour les un ou plusieurs TTI à venir sur la base des décisions de CCA reçues de la pluralité de points de R/T (22) desservant la cellule partagée (20), le système de traitement est en outre opérationnel pour :

- programmer un ou plusieurs dispositifs sans fil (32) pour une transmission en liaison descendante dans la cellule partagée (20) pour un TTI sur la base de probabilités prévisionnelles de réception réussie par les un ou plusieurs dispositifs sans fil (32) depuis la cellule partagée (20) au vu des statuts ACTIVÉ/DÉSACTIVÉ de la pluralité de points de R/T (22), dans lequel, pour chaque dispositif sans fil (32) parmi les un ou plusieurs dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) ayant le statut ACTIVÉ, d'une probabilité prévisionnelle individuelle de réception réussie par le dispositif sans fil (32) lorsque le point de R/T (22) transmet ;
- déclencher des transmissions en liaison descendante jusqu'aux un ou plusieurs dispositifs sans fil (32) depuis la cellule partagée (20) dans le TTI ;
- déterminer un succès ou un échec de réception de la transmission en liaison descendante par chacun parmi les un ou plusieurs dispositifs sans fil (32) dans le TTI ;
- pour chaque dispositif sans fil (32) parmi les un ou plusieurs dispositifs sans fil (32) programmés dans le TTI, mettre à jour la probabilité prévisionnelle individuelle de réception réussie par le dispositif sans fil (32) pour chacun parmi la pluralité de points de R/T (22) ayant le statut ACTIVÉ sur la base du succès ou de l'échec de réception de la transmission en liaison descendante par le dispositif sans fil (32) ; et
- répéter les opérations de programmation, de déclenchement, de détermination, et de mise à jour pour un ou plusieurs TTI additionnels.

13. Procédé selon la revendication 12, dans lequel le système de traitement est en outre opérationnel pour ajuster périodiquement les probabilités prévisionnelles individuelles.

**14.** Système de traitement (26) opérationnel pour programmer des transmissions en liaison descendante jusqu'à des dispositifs sans fil (32) dans une cellule partagée (20) dans une bande de fréquences sans licence, la cellule partagée (20) étant desservie par une pluralité de points de réception/transmission, R/T (22), comprenant :

au moins un processeur (34) ; et
une mémoire (36) contenant des instructions exécutables par l'au moins un processeur (34) d'où il résulte que le système de traitement (26) est opérationnel pour :

recevoir des décisions indépendantes d'évaluation de canal libre, CCA, de la pluralité de points de R/T (22) desservant la cellule partagée (20), chaque décision de CCA provenant de chaque point de R/T (22) étant indicatrice de si une CCA a réussi ou échoué au point de R/T (22) ;
exécuter une programmation pour un ou plusieurs intervalles de temps de transmission, TTI, à venir, sur la base des décisions de CCA reçues de la pluralité de points de R/T (22) desservant la cellule partagée (20) ; et
mettre à jour un statut ACTIVÉ/DÉSACTIVÉ de chacun de la pluralité de points de R/T (22) sur la base des décisions de CCA de telle manière qu'un statut ACTIVÉ/DÉSACTIVÉ d'un point de R/T (22) est ACTIVÉ si une décision de CCA respective est indicatrice d'un succès de CCA et DÉSACTIVÉ si la décision de CCA respective est indicatrice d'un échec de CCA ;

dans lequel, dans l'opération d'exécution (108) de la programmation pour les un ou plusieurs TTI à venir sur la base des décisions de CCA reçues de la pluralité de points de R/T (22) desservant la cellule partagée (20), le système de traitement est en outre opérationnel pour :

- pour chaque dispositif sans fil (32) parmi la pluralité de dispositifs sans fil (32) potentiellement programmé dans un TTI, mettre à jour une probabilité prévisionnelle individuelle de réception réussie par le dispositif sans fil (32) pour chacun de la pluralité de points de R/T (22) ayant le statut ACTIVÉ sur la base d'une localisation du dispositif sans fil (32), dans lequel la probabilité prévisionnelle individuelle de réception réussie par le dispositif sans fil (32) pour un point de R/T (22) est une probabilité prévisionnelle de réception réussie par le dispositif sans fil (32) lorsque le point de R/T (22) transmet ;
- programmer un ou plusieurs dispositifs sans fil (32) parmi la pluralité de dispositifs sans fil (32) pour une transmission en liaison descendante dans la cellule partagée (20) pour le TTI sur la base de probabilités prévisionnelles de réception réussie par les un ou plusieurs dispositifs sans fil (32) depuis la cellule partagée (20) au vu des statuts ACTIVÉ/DÉSACTIVÉ de la pluralité de points de R/T (22), dans lequel, pour chaque dispositif sans fil (32) parmi les un ou plusieurs dispositifs sans fil (32), la probabilité prévisionnelle de réception réussie par le dispositif sans fil (32) depuis la cellule partagée (20) est une fonction, pour chaque point de R/T (22) parmi la pluralité de points de R/T (22) ayant le statut ACTIVÉ, de la probabilité prévisionnelle individuelle de réception réussie par le dispositif sans fil (32) lorsque le point de R/T (22) transmet ;
- déclencher des transmissions en liaison descendante jusqu'aux un ou plusieurs dispositifs sans fil (32) depuis la cellule partagée (20) dans le TTI ; et
- répéter les opérations de mise à jour, de programmation, et de déclenchement pour un ou plusieurs TTI additionnels.

**15.** Programme informatique comprenant des instructions qui, lorsqu'elles sont exécutées sur au moins un processeur, amènent l'au moins un processeur à mettre en œuvre le procédé selon l'une quelconque des revendications 1 à 7.

**16.** Support contenant le programme informatique selon la revendication 15, dans lequel le support est un parmi un signal électronique, un signal optique, un signal radio, ou un support de stockage lisible par ordinateur.

**FIG. 1**

FIG. 2

EP 3 550 921 B1

*FIG. 3*

*FIG. 4*

*FIG. 5*

INITIALIZE INDIVIDUAL FORECASTED PROBABILITY OF SUCCESSFUL
RECEPTION FOR EACH UE AND R/T COMBINATION
200

j=0
202

TRIGGER CCA
204

RECEIVE INDEPENDENT CCA DECISIONS FROM THE R/T POINTS
206

UPDATE ON/OFF STATUS OF THE R/T POINTS BASED ON THE
INDEPENDENT CCA DECISIONS RECEIVED FROM THE R/T POINTS
208

SCHEDULE UEs FOR DOWNLINK TRANSMISSION IN THE SHARED CELL
FOR TTI j BASED ON FORECASTED PROBABILITY OF SUCCESSFUL
RECEPTION BY THE UEs FROM THE SHARED CELL ACCORDING TO THE
CURRENT ON/OFF STATUSES OF THE R/T POINTS
210

TRIGGER TRANSMISSION FOR TTI j
212

DETERMINE HARQ STATES OF THE SCHEDULED UEs FOR TTI j (i.e.,
DETERMINE SUCCESS OR FAILURE OF RECEPTION BY THE SCHEDULED
UEs FOR TTI j)
214

FOR EACH SCHEDULED UE, UPDATE THE INDIVIDUAL FORECASTED
PROBABILITY OF RECEPTION BY THE UE FROM EACH OF THE R/T POINTS
THAT WERE "ON" FOR TTI j BASED ON THE HARQ STATE OF THE UE
216

TIME TO AGE
FORECASTS?
218

NO

j=j++
222

YES

ADJUST FORECASTS (E.G., HALVE FORECASTS)
220

*FIG. 6*

```
                         j=0
                         300
                          │
                          ▼
                    TRIGGER CCA                        ◄─ ─ ─ ─┐
                         302                                    │
                          │                                     │
                          ▼                                     │
      RECEIVE INDEPENDENT CCA DECISIONS FROM THE R/T POINTS     │
                         304                                    │
                          │                                     │
                          ▼                                     │
        UPDATE ON/OFF STATUS OF THE R/T POINTS BASED ON THE     │
      INDEPENDENT CCA DECISIONS RECEIVED FROM THE R/T POINTS    │
                         306                                    │
                          │                                     │
                          ▼                                     │
   FOR EACH UE, UPDATE THE FORECASTED PROBABILITY OF RECEPTION  │
    BY THE UE FROM EACH OF THE R/T POINTS THAT ARE "ON" FOR TTI j│
   BASED ON THE LOCATION, OR POSITION, OF THE UE RELATIVE TO THAT ◄─┘
                      R/T POINT
                         308
                          │
                          ▼
    SCHEDULE UEs FOR DOWNLINK TRANSMISSION IN THE SHARED CELL
     FOR TTI j BASED ON FORECASTED PROBABILITY OF SUCCESSFUL
   RECEPTION BY THE UEs FROM THE SHARED CELL ACCORDING TO THE
        CURRENT ON/OFF STATUSES OF THE R/T POINTS
                         310
                          │
                          ▼
             TRIGGER TRANSMISSION FOR TTI j
                         312
                          │
                          ▼
                        j=j++
                         314
```

*FIG. 7*

*FIG. 8*

START

SAME
R/T POINT(S) BEING
MUTED DUE TO CCA FAILURE
FOR A PREDETERMINED
PERIOD OF TIME?
500

NO

YES

TRIGGER CHANNEL RESELECTION
502

FIG. 9

BASEBAND PROCESSING UNIT
30

NETWORK
INTERFACE
38

PROCESSOR(S)
34

MEMORY
36

*FIG. 10*

BASEBAND PROCESSING UNIT
30

CCA TRIGGERING MODULE
40

CCA DECISION RECEPTION MODULE
42

SCHEDULING MODULE
44

*FIG. 11*

**FIG. 12**

R/T POINT
22

CCA MODULE
56

TRANSMISSION MODULE
58

CCA DECISION TRANSMISSION MODULE
60

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015173056 A1

**Non-patent literature cited in the description**

- **ERICSSON.** On Support of Multiple DL Data Transmission Starting Points. *3GPP draft R1-156047*